(19) Europäisches Patentamt
European Patent Office
Office européen des brevets

(11) EP 2 383 118 B1

(12) **EUROPEAN PATENT SPECIFICATION**

(45) Date of publication and mention of the grant of the patent:
**16.10.2013 Bulletin 2013/42**

(51) Int Cl.:
***B41C 1/10*** *(2006.01)* ***C08G 18/32*** *(2006.01)*
***C08G 18/80*** *(2006.01)*

(21) Application number: **11164269.0**

(22) Date of filing: **29.04.2011**

(54) **Lithographic printing plate precursor and plate making method thereof**

Lithographiedruckplattenvorläufer und Plattenherstellungsverfahren damit

Précurseur de plaque d'impression lithographique et procédé de fabrication de plaque correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2010 JP 2010105907**
**15.03.2011 JP 2011057036**

(43) Date of publication of application:
**02.11.2011 Bulletin 2011/44**

(73) Proprietor: **Fujifilm Corporation**
**Minato-ku**
**Tokyo (JP)**

(72) Inventors:
- **Aoshima, Toshihide**
**Shizuoka (JP)**
- **Sato, Noriaki**
**Shizuoka (JP)**
- **Kuramoto, Mamoru**
**Shizuoka (JP)**

(74) Representative: **HOFFMANN EITLE**
**Patent- und Rechtsanwälte**
**Arabellastrasse 4**
**81925 München (DE)**

(56) References cited:
**EP-A2- 1 621 341** **US-A1- 2004 106 060**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

FIELD OF THE INVENTION

The present invention relates to a lithographic printing Plate Precursor which is capable of being subjected to a so-called direct plate making, in which the plate making is directly conducted based on digital signals, for example, from a computer using various kinds of lasers, particularly, to a lithographic printing plate precursor which is improved in printing durability, stain resistance and preservation stability, and a plate making method thereof.

BACKGROUND OF THE INVENTION

A solid laser, semiconductor laser and gas laser having a large output and a small size, which radiate an ultraviolet ray, visible light or infrared ray having a wavelength from 300 to 1.200 nm. have become easily available, and these lasers are very useful for recording light sources used in the direct plate making based on digital data, for example, from a computer. Various investigations on recording materials sensitive to such various laser beams have been made. In particular, a recording material capable of being recorded with infrared laser having a photosensitive wavelength of 760 nm or more has an advantage in that its handling in a bright room is easy, and a typical example thereof includes a radical polymerization type negative recording material described, for example, in JP- A- 2004- 212558 (the term "JP-A" as used herein means an "unexamined published Japanese patent application") .

Further, with respect to hitherto known lithographic printing plate precursors (hereinafter, also referred to as PS plates), a step of removing the non- image area by dissolution (development processing) is indispensable and a post- processing step, for example, washing the printing plate after the development processing with water, treatment of the grinting plate after the Development processing with a rinse solution containing a surfactant or treatment of the printing plate after the development processing with an oil- desensitizing solution containing gum arabic or a starch derivative, is also necessary. The point that such additional wet treatments are indispensable is a large subject of investigation in hitherto known PS plates. Even when the first half (image- forming process) of plate making process is simplified by the above- described digital processing, the effects due to the simplification is still insufficient as long as the last half (development processing) is the troublesome wet treatment.

Particularly, the consideration for global environment has become a great concern throughout the field of industry in recent years. In view of the consideration for global environment, a treatment with a developer closer to a neutral range and a small amount of waste liquid are subjects of further investigations. Further, it is desirable that the wet type post- processing is simplified or changed to a dry processing.

From this viewpoint, as one method for eliminating the processing step, a method referred to as on-press development wherein an exposed printing plate precursor is mounted on a cylinder of a printing machine and the non-image area of the printing plate precursor is removed by supplying dampening water and ink while rotating the cylinder is known. Specifically, according to the method, the printing plate precursor is exposed and mounted on a printing machine as it is to complete development processing in a conventional process of printing.

In order to fulfill requirements for the on-press development, a lithographic printing plate precursor having provided on a hydrophilic support an image-recording layer in which fine particles of thermoplastic hydrophobic polymer are dispersed in a hydrophilic binder polymer is proposed (see, for example, Japanese Patent 2938397). In the plate making, the lithographic printing plate precursor is exposed to infrared laser to agglomerate (fuse) the fine particles of thermoplastic hydrophobic polymer by heat generated by light-to-heat conversion thereby forming an image, and mounted on a cylinder of a printing machine to carry out on-press development by supplying at least any one of dampening water and ink. Since the lithographic printing plate precursor has the sensitive zone in an infrared region, it also has the handling property in a bright room.

However, the image formed by the agglomeration (fusion) of the fine particles of thermoplastic hydrophobic polymer is insufficient in strength and has a problem of printing durability as a printing plate.

Lithographic printing plate precursors including microcapsules containing a polymerizable compound encapsulated therein in stead of the thermoplastic fine particles are also proposed (see, for example, JP- A- 2000- 211262, JP- A- 2001- 277740, JP- A- 2002- 29162, JP- A- 2002- 46361, JP- A- 2002- 137562 and JP- A- 2002- 326470) . In the lithographic printing plate precursors according to such a proposal, it is advantageous that the polymer image formed by a reaction of the polymerizable compound is excellent in the strength in comparison with the image forked by the fusion of the fine particles.

Also, since the polymerizable compound has high reactivity, many proposals for isolation of the polymerizable compound using microcapsules have been made. Further, it has been proposed to use a thermally degradable polymer in a shell of the microcapsule.

However, in the hitherto known lithographic printing plate precursors described in JP- A- 2004- 212558, Japanese Patent 2938397, JP- A- 2000- 211262, JP- A- 2001- 277740, JP- A- 2002- 29162, JP- A- 2002- 46361, JP- A-2002- 137562 and JP- A- 2002- 326470, printing durability of the image formed by laser exposure is insufficient and thus further improvements have been requested. Specifically, it is difficult to obtain sufficient printing durability in the image cured in the recording material capable of being recorded with infrared laser having a photosensitive wavelength of 760 nm or more. In order to increase the printing durability, when a support having a surface of low hydrophilicity is used, ink also adheres on the non- image area during printing to cause printing stain. Thus, in the recording material capable of being recorded with infrared laser having a photosensitive wavelength of 760 nm or more, the problem is to achieve good stain resistance and sufficient printing durability. In particular, in the on- press Development using dampening water and/or printing ink, since the developing property is poor in comparison with a system including development with an alkali developer, the stain is apt to occur so that it is more difficult to achieve the problem.

US- A- 2004/0106060 teaches a lithographic printing plate precursor comprising a hydrophilic support having thereon a heat- sensitive layer containing either a microcapsule containing a compound having a functional group capable of reacting by heat or a fine particulate polymer, wherein (1) when the heat- sensitive layer contains a fine particulate polymer, the fine particulate polymer may be a fine particulate polymer capable of combining or incapable of combining by heat used for the image formation and the fine particulate polymer has a functional group capable of reacting with a functional group present in another fine particulate polymer or with a functional group present in another component in the heat- sensitive layer; or (2) when the heat- sensitive layer contains a microcapsule containing a compound having a functional group capable of reacting by heat, the microcapsule may be a microcapsule having an outer wall capable of rupturing or incapable of rupturing by heat used for the image formation and a light- to- heat converting material is contained in the heat- sensitive layer or in a layer adjacent thereto.

## SUMMARY OF THE INVENTION

An object of the present invention is to provide a lithographic printing plate precursor which is capable of being subjected to a direct plate making based on digital data, for example, from a computer, by image-recording using a solid laser or semiconductor laser radiating an infrared ray and which exhibits high printing durability while maintaining stain resistance and preservation stability, and particularly, to provide a lithographic printing plate precursor capable of undergoing on-press development and a plate making method thereof.

Specifically, the present invention includes the following items.

(1) A lithographic printing plate precursor comprising a hydrophilic support and an image-recording layer containing (A) a polymer fine particle, (B) a radical polymerizable compound and (C) an infrared absorbing dye, wherein (A) the polymer fine particle is a polymer fine particle obtained by a reaction between a polyvalent isocyanate compound which is an adduct of a polyhydric phenol compound having two or more hydroxyl groups in its molecule and isophorone diisocyanate and a compound having an active hydrogen atom.

(2) The lithographic printing plate precursor as described in (1) above, wherein the polyhydric phenol compound is a polyhydric phenol compound having three or more hydroxyl groups in its molecule.

(3) The lithographic printing plate precursor as described in (1) or (2) above, wherein the polyhydric phenol compound is a polyhydric phenol compound having three or more hydroxyl groups in its molecule represented by formula (1) or (2) shown below:

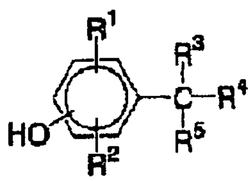 (1)

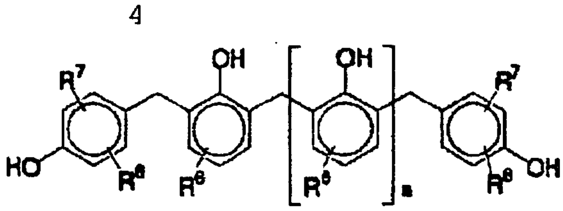 (2)

In formula (1), $R^1$ and $R^2$ each independently represents a hydrogen atom, a methyl group or a cyclohexyl group, $R^3$ represents a hydrogen atom, a methyl group or a group represented by formula (a) shown below, in formula (a), $R^1$ and $R^2$ have the same meanings as $R^1$ and $R^2$ in formula (1) respectively, n represents an integer from 0 to 2, and $R^9$ represents a hydrogen atom, a methyl group or a cyclohexyl group;

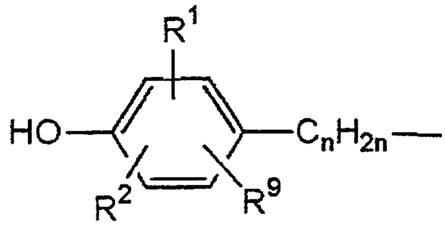

(a)

In formula (1), $R^4$ represents a methyl group or a group represented by formula (a) shown above, $R^5$ represents a hydrogen atom or a group selected from Group A shown below, in formulate of Group A, $R^1$ and $R^2$ have the same meanings as $R^1$ and $R^2$ in formula (1) respectively:

Group A

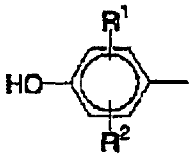

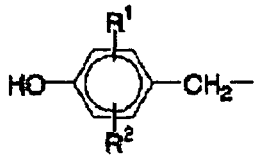

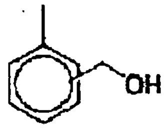

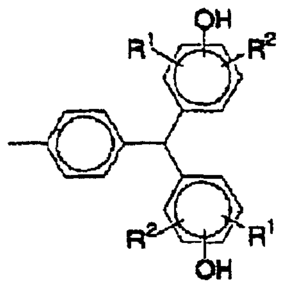

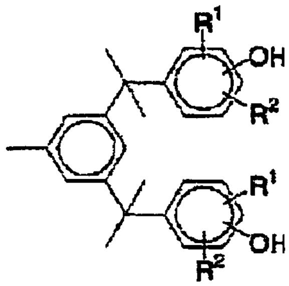

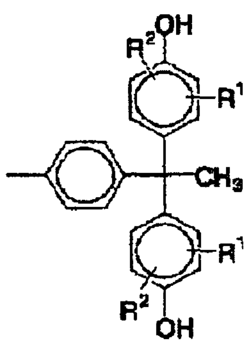

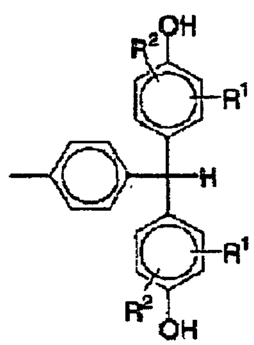

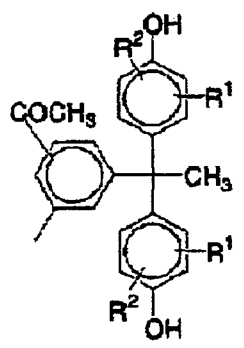

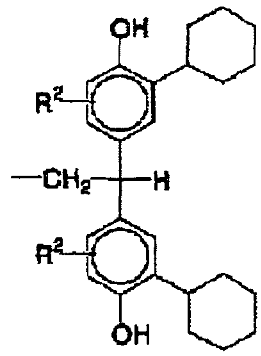

In formula (2), $R^6$ represents a hydrogen atom, a methyl group a phenyl group or a cyclohexyl group, $R^7$ and $R^8$ each independently represents a hydrogen atom, a methyl group or a cyclohexyl group, and m represents 0 or 1.

(4) The lithographic printing plate precursor as described in any one of (1) to (3) above, wherein the polyvalent isocyanate compound is an adduct of isophorone diisocyanate and a compound represented by formula (4) shown below:

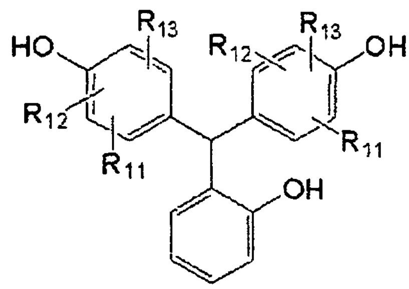

(4)

In formula (4), $R_{11}$ $R_{12}$ and $R_{13}$ each independently represents a hydrogen atom, a methyl group or a cyclohexyl group.
(5) The lithographic printing plate precursor as described in (4) above, wherein a molar ratio of the isophorone diisocyanate and the compound represented by formula (4) is from 3 : 1 to 6: 1
(6) The lithographic printing plate precursor as described in any one of (1) to (5) above, wherein (A) the polymer fine particle has a radical polymerizable group.
(7) The lithographic printing plate precursor as described in any one of (1) to (6) above, wherein (A) the polymer fine particle has a polyoxyalkylene chain in its side chain.
(8) The lithographic printing plate precursor as described in any one of (1) to (7) above, wherein the infrared absorbing dye is a cyanine dye represented by formula (3) shown below:

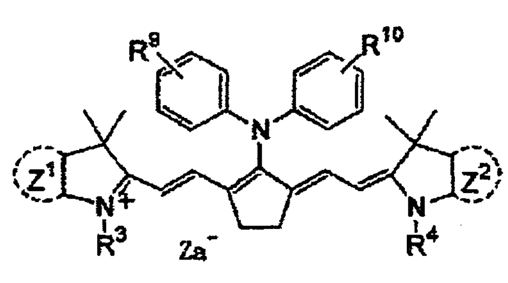

(3)

In formula (3), $Z^1$ and $Z^2$ each independently represents an aromatic ring which may have a substituent or a heteroaromatic ring which may have a substituent, $R^3$ and $R^4$ each independently represents a hydrocarbon group having 20 or less carbon atoms which may have a substituent, $R^9$ and $R^{10}$ each independently represents a hydrogen atom or an alkoxy group which may have a substituent, and $Za^-$ represents a counter anion which is present when

neutralization of charge is necessary.

(9) The lithographic printing plate precursor as described in any one of (1) to (8) above, which is a lithographic printing plate precursor of on-press development type, wherein an unexposed area of the image-recording layer is able to be removed with at least any of dampening water and printing ink.

(10) A plate making method comprising exposing imagewise the lithographic printing plate precursor of on-press development type as described in (9) above, mounting it on a cylinder of a printing machine, and removing an unexposed area of the image-recording layer with at least any of dampening water and printing ink.

The functional mechanism of the invention is not quite clear but it is estimated that the polymer fine particle has high organicity and water permeability in the image area decreases, thereby improving printing durability.

According to the present invention, a lithographic printing plate precursor having high productivity which is capable of being subjected to a so-called direct plate making, in which the plate making is directly conducted based on digital signals, for example, from a computer using various kinds of lasers can be provided. In particular, a lithographic printing plate precursor of on-press development type which is excellent in printing durability, preservation stability and stain resistance can be provided.

<u>DETAILED DESCRIPTION OF THE INVENTION</u>

The lithographic printing plate precursor according to the invention has an image-recording layer on a hydrophilic support It may have an undercoat layer between the support and the image-recording layer and a protective layer on the image-recording layer, if desired. The protective layer may have a multilayer structure. The lithographic printing plate precursor may have a backcoat layer on the rear side of the support.

The present invention can be applied to any lithographic printing plate precursor of plate making system including development using a conventional developer after exposure and of plate making system including on-press development without using a developer after exposure.

The lithographic printing plate precursor according to the invention will be described in order below.

[Image-recording layer]

The image-recording layer according to the invention contains (A) a polymer fine particle, (B) a radical polymerizable compound and (C) an infrared absorbing dye, wherein (A) the polymer fine particle is characterized by obtaining by a reaction between a polyvalent isocyanate compound (hereinafter, also referred to as a "polyvalent isocyanate adduct") which is an adduct of a polyhydric phenol compound having two or more hydroxyl groups in its molecule and isophorone diisocyanate and a compound having an active hydrogen atom.

[(A) Polymer fine particle]

A polymer fine particle according to the invention is a polymer fine particle having a urethane/urea bond or a urethane bond obtained by a reaction between a polyvalent isocyanate compound which is an adduct of a polyhydric phenol compound having two or more hydroxyl groups in its molecule and isophorone diisocyanate and a compound having an active hydrogen atom, for example, water.

[Polyhydric phenol]

The polyhydric phenol is a compound having plural phenolic hydroxy groups in its molecule and it is preferably a compound containing plural benzene rings having a phenolic hydroxy group in its molecule.

It is more preferably a polyhydric phenol compound having three or more phenolic hydroxy groups in its molecule represented by formula (1) or (2) shown below.

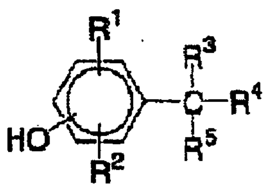

(1)

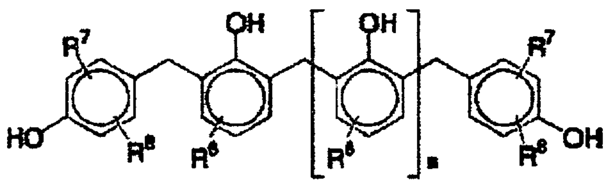

(2)

In formula (1), $R^1$ and $R^2$ each independently represents a hydrogen atom, a methyl group or a cyclohexyl

group, $R^3$ represents a hydrogen atom, a methyl group or a group represented by formula (a) shown below, in formula (a), $R^1$ and $R^2$ have the same meanings as $R^1$ and $R^2$ in formula (1) respectively, n represents an integer from 0 to 2, and $R^9$ represents a hydrogen atom, a methyl group or a cyclohexyl group;

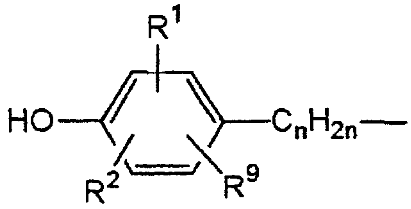

(a)

In formula (1), $R^4$ represents a methyl group or a group represented by formula (a) shown above, $R^5$ represents a hydrogen atom or a group selected from Group A shown below, in formulae of Group A, $R^1$ and $R^2$ have the same meanings as $R^1$ and $R^2$ in formula (1) respectively:

Group A

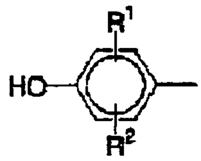
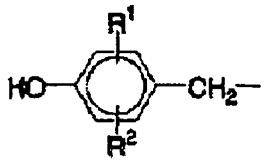
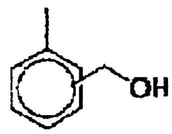

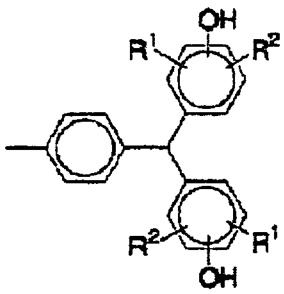
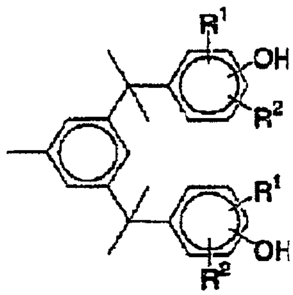

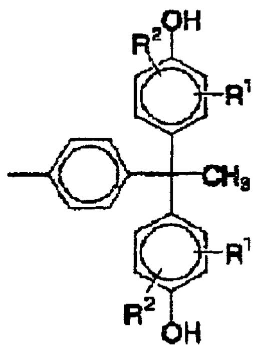
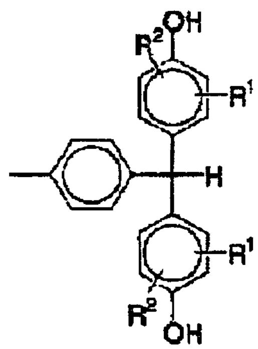

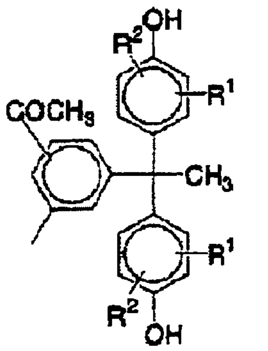

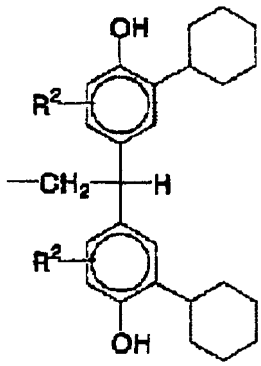

In formula (2), $R^6$ represents a hydrogen atom, a methyl group a phenyl group or a cyclohexyl group, $R^7$ and $R^8$ each independently represents a hydrogen atom, a methyl group or a cyclohexyl group, and m represents 0 or 1.

Specific examples of the polyhydric phenol compound represented by formula (1) or (2) according to the invention are set forth below.

P-1

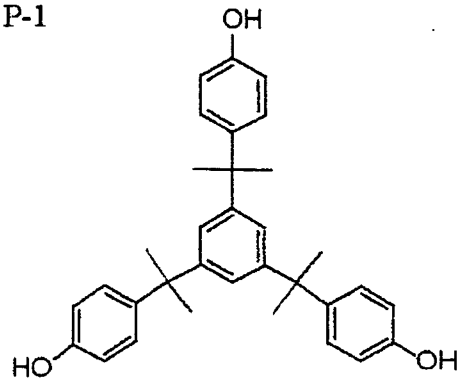

(I/O=0.546)

P-2

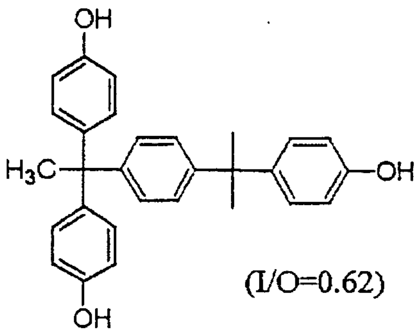

(I/O=0.62)

P-3

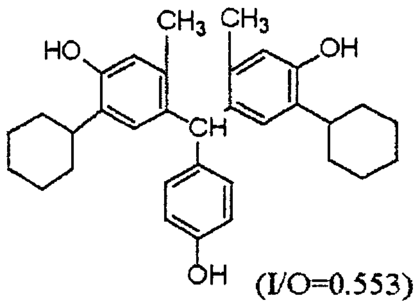

(I/O=0.553)

P-4

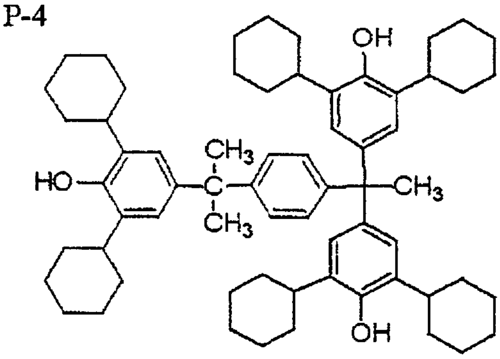

(I/O=0.323)

P-5

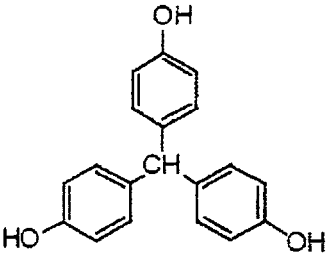

(I/O-0.91)

P-6

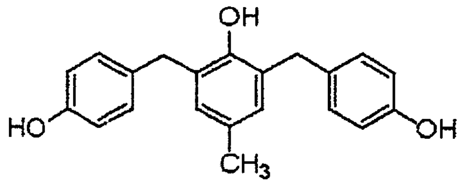

(I/O=0.82)

P-7

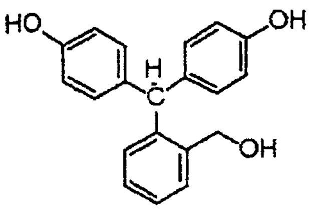

(I/O=0.86)

P-8

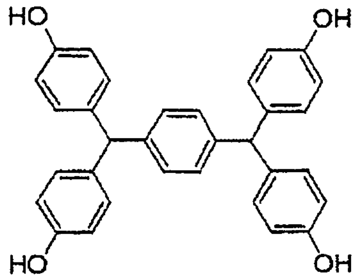

(I/O=0.74)

P-9

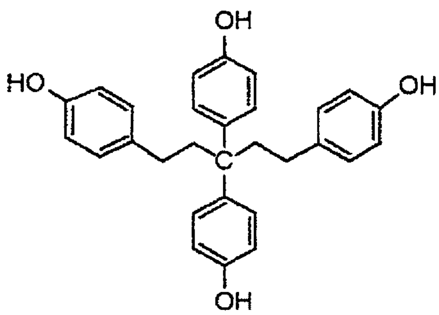

(I/O=0.793)

P-10

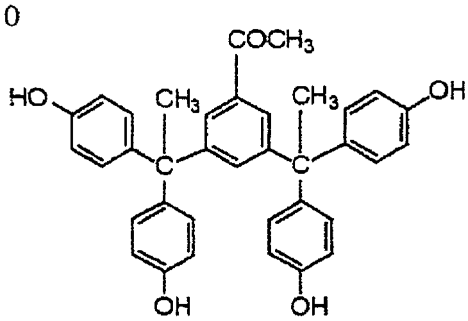

(I/O=0.75)

P-11

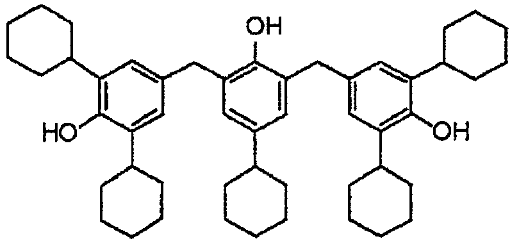

(I/O=0.395)

P-12

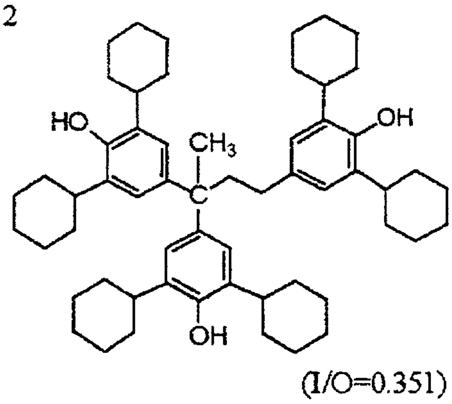

(I/O=0.351)

P-13

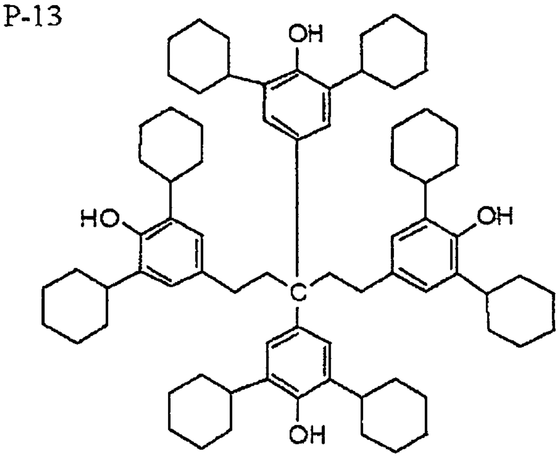

(I/O=0.351)

P-14

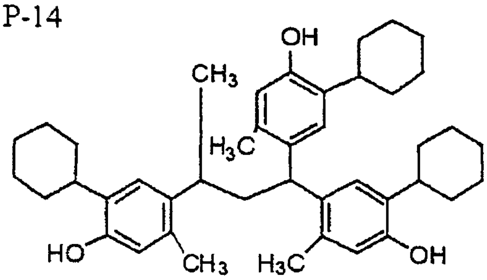

(I/O=0.436)

P-15

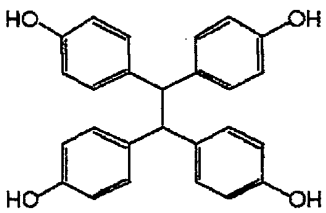

(I/O=0.885)

P-16

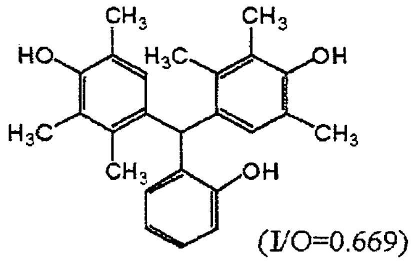

(I/O=0.669)

A polyhydric phenol compound represented by formula (4) shown below is particularly preferred.

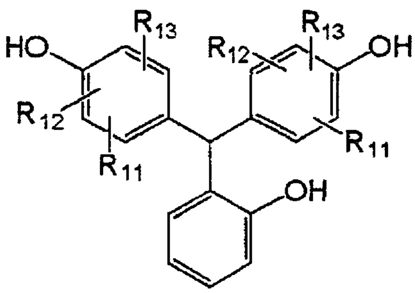

(4)

In formula (4), $R_{11}$, $R_{12}$ and $R_{13}$ each independently represents a hydrogen atom, a methyl group or a cyclohexyl group.

Specific examples of the polyhydric phenol compound represented by formula (4) according to the invention are set forth below.

PS-16

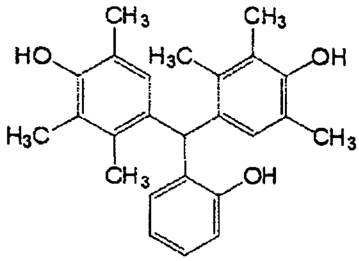

PS-17

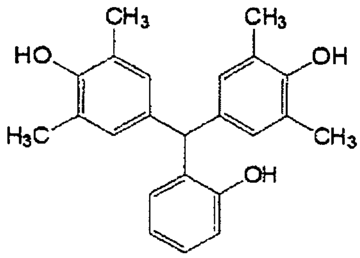

PS-18

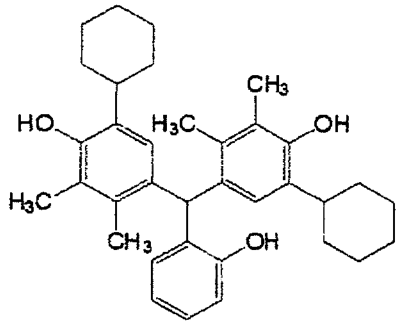

PS-19

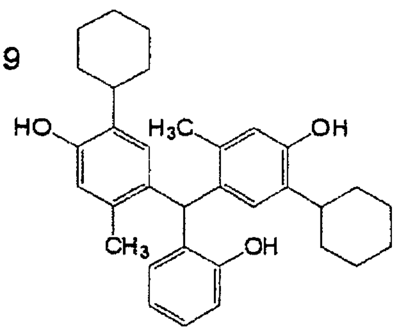

PS-20

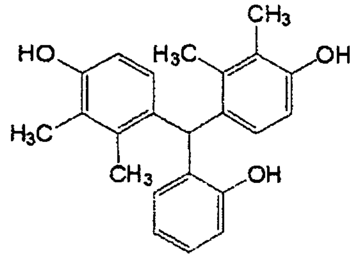

PS-21

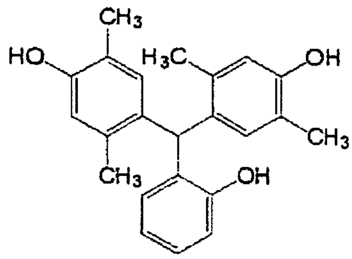

PS-22

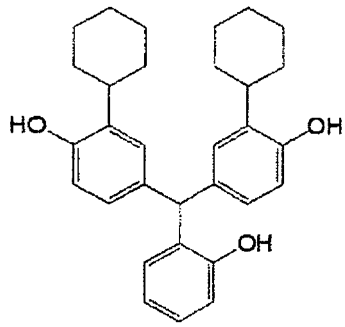

PS-23

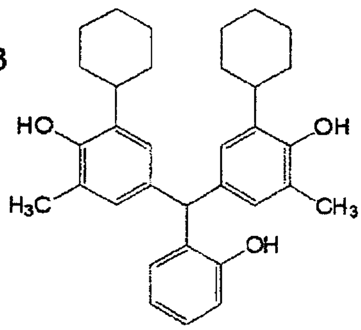

Of the polyhydric phenol compounds represented by formula (1) or (2), a compound having an (inorganicity) / (organicity) value from 0.3 to 1.0 is preferably used in the invention. The number of (I/O) indicated in the parentheses in the specific examples above means the (inorganicity) / (organicity) value and is obtained by calculation based on Yoshio Koda, Yuuki Gainenzu- Kiso to Oyo (Organic Conceptual Diagram- Fundamental and Application), Sankyo Publishing Co., Ltd. (1984) . Increase in the organicity in the (inorganicity) / (organicity) value mainly depends on a number of carbon atoms of an organic compound and the value is calculated one carbon atom as 20. Also, increase in the inorganicity mainly depends on a substituent of organic compound and the value is calculated one hydroxy group as 100 and determined on the basis of effect of the group on boiling point, In case of phenol, the (inorganicity) / (organicity)

value is 1.0. It can be said that in the polyhydric phenol compounds having the (inorganicity) / (organicity) value in the range described above, a ratio of hydrocarbon is equal to or higher in comparison with phenol. A polymer fine particle obtained by using an isocyanate adduct (polyvalent isocyanate compound) obtained from the polyhydric phenol compound has hydrophobicity and it is estimated that water permeability in the image area is inhibited, thereby improving printing durability.

A molar ratio of isophorone diisocyanate and polyhydric phenol compound (isophorone diisocyanate : polyhydric phenol compound) is preferably from 3 : 1 to 6 : 1, more preferably from 3.5 : 1 to 5.5 : 1, and particularly preferably from 4 : 1 to 5 : 1. When the ratio of isophorone diisocyanate and polyhydric phenol compound is not lower than the lower limit of the range described above, viscosity becomes not too high and coarsening of the polymer fine particle is preferably prevented. On the other hand, when the ratio of isophorone diisocyanate and polyhydric phenol compound is not higher than the upper limit of the range described above, crosslink density in the polymer fine particle becomes not too low and the effect of improving printing durability preferably further increases.

[Synthesis method of polyvalent isocyanate compound]

An adduct (polyvalent isocyanate compound) of a polyhydric phenol compound having three or more hydroxyl groups in its molecule represented by formula (1) or (2) described above and isophorone diisocyanate can be obtained, for example, by heating (at 50 to 100°C) the polyhydric phenol compound and isophorone diisocyanate in an organic solvent with stirring, or by heating at a relatively low temperature (at 40 to 70°C) the polyhydric phenol compound and isophorone diisocyanate in an organic solvent while adding a catalyst, for example, stannous octoate. As to a mole number (number of molecule) of isophorone diisocyanate which is reacted with the polyhydric phenol compound, ordinarily from 0.8 to 1.5 times the mole number (number of molecule) of isophorone diisocyanate per mole number of hydroxy group (equivalent of hydroxy group) of the polyhydric phenol compound is used.

The polyvalent isocyanate compound obtained by the reaction described above is subjected to dibutyl-ureidation with dibutylamine to determine a molecular weight (as calculated in terms of polystyrene) and a weight average molecular weight thereof is preferably from 1,000 to 40,000, and particularly preferably from 2,000 to 34,000.

Examples of the organic solvent include ethyl acetate, chloroform, tetrahydrofuran, methyl ethyl ketone, acetone, acetonitrile and toluene.

Preparation method of polymer fine particle]

The polymer fine particle according to the invention is composed of a polymer obtained by a reaction between an isocyanate compound and a compound having an active hydrogen atom and the isocyanate compound includes at least the polyvalent isocyanate compound according to the invention. Thus, the polymer fine particle according to the invention is able to increase printing durability without accompanying deterioration of developing property.

The polymer fine particle according to the invention can be prepared in the same manner as a heretofore known method for forming microcapsule as described in detail in Asashi Kondo, Microcapsule, The Nikkan Kogyo Shimbun, Ltd. (1970) and Tamotsu Kondo et al., Microcapsule, Sankyo Publishing Co., Ltd. (1977).

The polymer fine particle having a polyurethane/polyurea wall or polyurethane wall is synthesized by an interfacial polymerization reaction. Specifically, a method is heretofore known where a polyfunctional isocyanate compound is added to an organic solvent and the organic phase solution is emulsified in an aqueous solution of water-soluble polymer and then, by adding a catalyst for accelerating polymerization reaction to the aqueous phase or by raising temperature of the emulsion, the polyfunctional isocyanate compound is polymerized with a compound having an active hydrogen atom, for example, water to form a polymer fine particle. By adding the constituting component of the image-recording layer to the organic phase solution, a microcapsule having the constituting component of the image-recording layer encapsulated therein can be prepared. As the constituting component of the image-recording layer encapsulated therein, a radical polymerizable compound is particularly preferred.

[Combination use of other polyfunctional isocyanate compound]

As the isocyanate compound which is a raw material of the polymer fine particle, other polyfunctional isocyanate compound having two or more isocyanate groups in its molecule can be used in combination with the polyvalent isocyanate compound which is an adduct of the polyhydric phenol compound and isophorone diisocyanate according to the invention. As the other polyfunctional isocyanate compound having two or more isocyanate groups in its molecule, known compounds, for example, a diisocyanate, e.g., xylene diisocyanate or hydrogenated product thereof, hexamethylene diisocyanate, tolylene diisocyanate or hydrogenated product thereof or isophorone diisocyanate are exemplified. Further, a trimer (biuret or isocyanurate) of thereof using the compound described above as a main raw material, a polyfunctional compound as an adduct with polyol, for example, trimethylolpropane, a formalin condensate of benzene isocyanate and

the like can be used. Of the compounds described above, xylene diisocyanate, tolylene diisocyanate or isophorone diisocyanate is preferred. These compounds are described in Keiji Iwata ed., Polyurethane Jushi Handbook Polyurethane Resin Handbook), The Nikkan Kogyo Shimbun, Ltd. (1987).

[Compound having active hydrogen atom]

As the compound having an active hydrogen atom which reacts to the polyvalent isocyanate compound in order to from a microcapsule wall at the microcapsulation according to the invention, water is ordinarily used. Also, a polyol is used as the compound having an active hydrogen atom. The polyol can be used by adding an oil phase constituting a core or an aqueous phase containing a water-soluble polymer compound constituting a dispersion medium. The polyol specifically includes propylene glycol, glycerine and trimethylolpropane. Further, in place of the polyol or together with the polyol, an amine compound, for example, diethylenetriamine or tetraethylenepentamine may be used. These compounds are also described in Polyurethane Jushi Handbook (Polyurethane Resin Handbook) above.

[Water-soluble polymer compound for dispersing oil phase in aqueous phase]

As the water-soluble polymer compound for dispersing an oil phase in an aqueous phase in the formation of microcapsule, polyvinyl alcohol and a modified product thereof, polyacrylamide and a derivative thereof, an ethylene/vinyl acetate copolymer, a styrene/maleic anhydride copolymer, an ethylene/maleic anhydride copolymer, an isabutylene/maleic anhydride copolymer, polyvinylpyrrolidone, an ethylene/acrylic acid copolymer, a vinyl acetate/acrylic acid copolymer, carboxymethyl cellulose, methyl cellulose, casein, gelatin, a starch derivative, gum arabic and sodium alginate are exemplified. Of the water-soluble polymers, those which do not react or hardly react with an isocyanate compound are preferred. In case of a compound having a reactive amino group in its molecular chain, for example, gelatin, it is necessary to be modified to lose the reactivity in advance.

[Surfactant]

In the microcapsulation, although a surfactant may be used by adding any of an oil phase and an aqueous phase, it is easy to add the aqueous phase because of low solubility in an organic solvent. The amount of the surfactant added is preferably from 0.1 to 5% by weight, particularly preferably from 0.5 to 2% by weight, based on the weight of the oil phase. It is ordinarily thought that as the surfactant for use in emulsification and dispersion, a surfactant having a relatively long-chain hydrophobic group is advantageous (see Ichiro Nishi et al., Kaimen Kasseizai Binran (Surfactant Handbook), Sangyotosho Co., Ltd. (1980)). Examples of such a surfactant used include an alkali metal salt of alkylsulfonic acid or alkylbenzenesulfonic acid.

In the invention, a compound, for example, a formalin condensate of an aromatic sulfonate or a formalin condensate of an aromatic carboxylate can also be used as the surfactant (emulsifying auxiliary) . Specifically, a compound represented by formula shown below is exemplified. The compound is described in TP- A- 5- 297856.

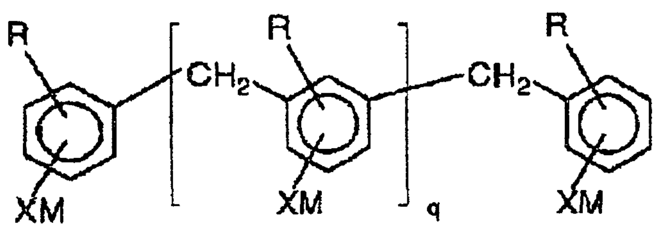

In the formula above, R represents an alkyl group having from 1 to 4 carbon atoms, X represents $S0_3^-$ or $COO^-$, M represents $Na^+$ or $K^+$, and q represents an integer from 1. to 20.

An alkylglucoside compound can also be used. Specifically, a compound represented by formula shown below is exemplified..

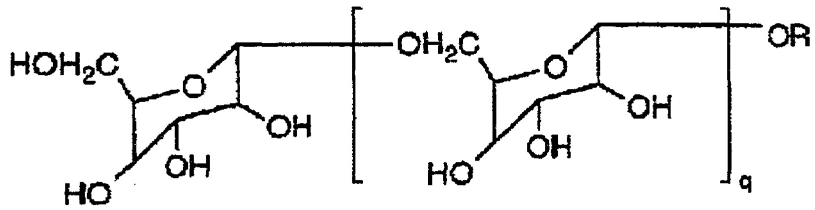

In the formula above, R represents an alkyl group having from 4 to 18 carbon atoms, and q represents an integer from 0 to 2.

The surfactants may be used individually or in combination of two or more thereof in the invention.

[Polymer fine particle having radical polymerizable group on its surface]

Of the polymer fine particles, an embodiment of a reactive polymer fine particle having a radical polymerizable group on its surface is particularly preferred from the standpoint of image-forming sensitivity and printing durability.

[Method of introducing radical polymerizable group into polymer fine particle]

A method of introducing a radical polymerizable group into a particle-forming material is described below.

Examples of the radical polymerizable group include- $(CH_2)_nCR^1=CR^2R^3$, $-(CH_2O)$ $nCH_2CR^1=CR^2R^3$, $-(CH_2CH_2O)_nCH_2CR^1=CR^2R^3$, $-(CH_2)_nNH$- CO- O- $CH_2CR^1=CR^3$, $-(CH_{2)n}$- O- CO- $CR^1=CR^2R^3$ and- $(CH_2CH_2O)_2$- X (wherein $R^1$ to $R^3$ each independently represents a hydrogen atom, a halogen atom or an alkyl group having from 1 to 20 carbon atoms, an aryl group, alkoxy group or aryloxy group, or $R^1$ and $R^2$ or $R^1$ and $R^3$ may be combined with each other to form a ring. n represents an integer from 1 to 10. X represents a dicyclopentadienyl residue), but the invention should not be construed as being limited thereto.

The compound containing a radical polymerizable group for use in the synthesis of the polymer fine particle is preferably a compound represented by formula (b) shown below.

$L^1Lc_mZ_n$ (b)

In formula (b), $L^1$ represents an m+n value connecting group, m and n each independently represents an integer from 1 to 100, Lc represents a monovalent ethylenically unsaturated group, and Z represents a nucleophilic group.

$L^1$ is preferably a divalent or higher valent aliphatic group, a divalent or higher valent aromatic group, a divalent or higher valent heterocyclic group, -O-, - S-, - NH-, - N<, -CO-, - SO-, - $SO_2$- or a combination of these groups.

m and n each independently represents preferably an integer from 1 to 50, more preferably an integer from 1 to 20, still more preferably an integer from 1 to 10, and most preferably an integer from 1 to 5. Among them, cases where m is an integer from 1 to 3 and n is 1 are particularly preferred.

The monovalent ethylenically unsaturated group represented by Lc includes an allyl group, a vinyl group, an acryloyl group and a methacryloyl group.

Z is preferably -OH, -SH or $-NH_2$, more preferably -OH or -SH, and most preferably -OH.

Specific examples of the compound containing a radical polymerizable group are set forth below, but the invention should not be construed as being limited thereto.

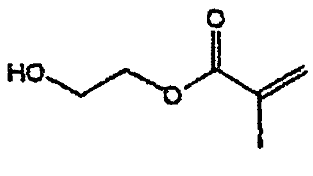

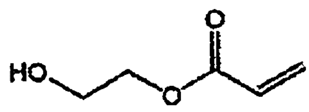

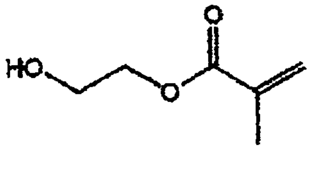

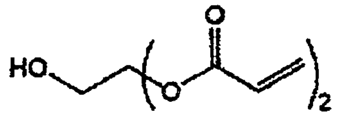

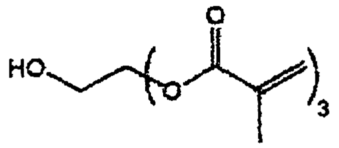

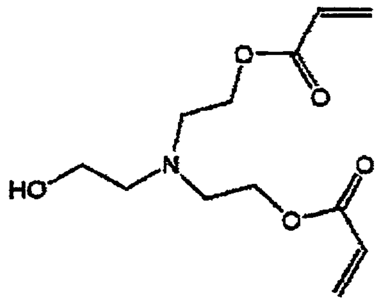

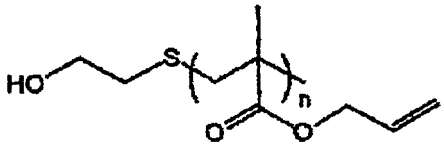

(n=10~50)

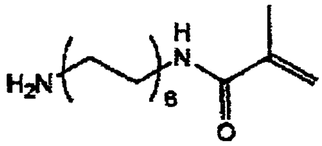

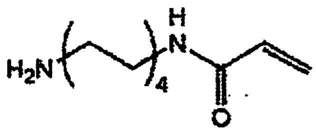

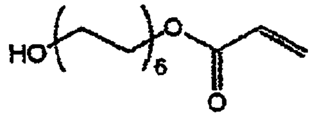

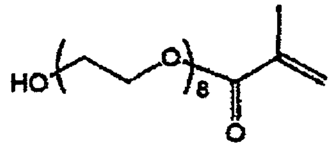

The compounds containing a radical polymerizable group may be used in combination of two or more thereof An adduct with the polyvalent isocyanate compound can be formed using other polyol together with the compound containing a radical polymerizable group. Also, an adduct of the compound containing a radical polymerizable group and the polyvalent isocyanate compound can be used together with an adduct of other polyol compound and the polyvalent isocyanate compound. Further, an adduct of other polyol compound and the polyvalent isocyanate compound may be subjected to a reaction with the compound containing a radical polymerizable group to synthesize an adduct of the compound containing a radical polymerizable group (modification of adduct).

[Polymer fine particle having hydrophilic polymer in its side chain]

Of the polymer fine particles, an embodiment of a polymer fine particle having a hydrophilic polymer that functions as a protective colloid in its side chain is particularly preferred from the standpoint of developing property.

[Method of introducing hydrophilic polymer into polymer fine particle]

The polymer fine particle having a hydrophilic polymer in its side chain may be prepared by dissolving the polyvalent isocyanate compound in a solvent immiscible with water, emulsifying dispersing the resulting solution in an aqueous solution containing a hydrophilic polymer having at least one active hydrogen group capable of reacting with an isocyanate group at its one terminal, and then removing the solvent from oil droplets in the emulsified dispersion, or may be prepared by reacting the polyvalent isocyanate compound with a hydrophilic polymer having at least one active hydrogen group at its one terminal, dissolving the resulting compound in a solvent immiscible with water, emulsifying dispersing the solution in an aqueous solution, and then removing the solvent from oil droplets in the emulsified dispersion.

[Hydrophilic polymer having at least one active hydrogen group at its one terminal]

The hydrophilic polymer having at least one active hydrogen group capable of reacting with an isocyanate group at its one terminal is described below. The active hydrogen group capable of reacting with an isocyanate group

includes, for example, a hydroxy group, an amino group, a mercapto group and a carboxyl group. In particular, a hydroxy group or an amino group is preferred. The hydrophilic polymer having at least one active hydrogen group at its one terminal is not particularly restricted and includes, for example, a compound containing a polyoxyalkylene chain having an active hydrogen group at its one terminal.

A weight average molecular weight (Mw) of the hydrophilic polymer is preferably from 300 to 500,000, and more preferably from 500 to 100,000. When the Mw is in a range from 300 to 500,000, the hydrophilic polymer functions sufficiently as a protective colloid, ensures dispersion stability of the polymer fine particle, and also achieves sufficiently hydrophilicity on the surface.

Specific examples of the hydrophilic polymer include, as a compound containing a polyoxyalkylene chain, for example, polyethylene oxide and an ethylene oxide-propylene oxide copolymer. The hydrophilic polymer can be synthesized, for example, by conducting ring-opening polymerization of a cyclic compound, for example, ethylene oxide or propylene oxide using an alcohol, an alkoxide, a carboxylic acid, a carboxylate or the like as a polymerization initiating terminal, and converting the polymerization initiating terminal to a hydroxy group or an amino group which is an active hydrogen group by a hitherto known reaction (for example, hydrolysis reaction or reduction reaction). Also, a polyether having an active hydrogen group at its one terminal can be utilized. Of the compounds, a monoether of polyethylene oxide (including as the monoether, for example, monomethyl ether or monoethyl ether) and a monoester of polyethylene oxide (including as the monoester, for example, monoacetic acid ester or mono(meth)acrylic acid ester) are more preferred.

Among them, a polyether derivative having a terminal amino group or a terminal hydroxy group represented by formula (c) shown below is preferred.

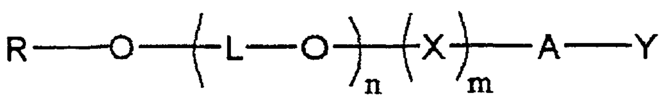

(c)

In formula (c), X represents a connecting group. The connecting group represented by X is preferably --C(=O)- or $-SO_2-$, and more preferably -C(=O)-.

In formula (c), m represents 0 or 1. A represents an arylene group or an alkylene group. Y represents an amino group or a hydroxy group.

The arylene group represented by A is preferably an arylene group having a total number of carbon atoms from 6 to 30 which may have a substituent, and particularly preferably an arylene group having a total number of carbon atoms from 6 to 20. The substituent for the substituted arylene group preferably includes a halogen atom, an alkyl group, an alkoxy group, an alkoxycarbonyl group, an aryloxycarbonyl group and a cyano group, and particularly preferably includes an alkyl group and an alkoxy group. Specific examples of the arylene group include a phenylene group, a biphenylene group, a naphthylene group, a tolylene group and a (methoxy)phenylene group.

The alkylene group represented by A is preferably an alkylene group having a total number of carbon atoms from 1 to 30, and particularly preferably an alkylene group having a total number of carbon atoms from 1 to 20. Specific examples of the alkylene group include a methylene group, an ethylene group, a propylene group and a tetramethylene group.

In formula (c), specific examples of the group represented by $-(x)_m-A-Y$ include an aminoethyl group, an aminopropyl group, a 4-aminobenzoyl group, a 3-aminobenzoyl group, a 4-aminobenzenesulfonyl group, an aminoacetyl group, an aminoethylsulfonyl group, a hydroxyethyl group, a hydroxypropyl group, a 4-hydroxybenzoyl group, a 3-hydroxybenzoyl group, a 4-hydroxybenzenesulfonyl group, a hydroxyacetyl group and a hydroxyethylsulfonyl group.

In formula (c), L represents an alkylene group. The alkylene group represented by L is preferably an alkylene group having a total number of carbon atoms from 2 to 20 which may have a substituent or may have a branched structure, and particularly preferably an alkylene group having a total number of carbon atoms from 2 to 10. The substituent for the substituted alkylene group preferably includes an aryl group, an alkenyl group, an alkoxy group and an acyl group, and particularly preferably includes an aryl group. Specific examples of the alkylene group include an ethylene group, a propylene group, a tetramethylene group, a phenylethylene group, a cyclohexylene group, a vinylethylene group and a phenoxymethylethylene group, particularly preferably include an ethylene group and a propylene group, and most preferably include an ethylene group.

In formula (c), although in n repeating units represented by $-(L-O)_n-$ Ls may be different from each other, Ls are particularly preferably the same. Specific examples of the polyether having such a repeating unit include polyethylene oxide, polypropylene oxide, polytetramethylene oxide, polystyrene oxide, polycyclohexylene oxide, a polyethylene oxide-polypropylene oxide block copolymer and a polyethylene oxide-polypropylene oxide random copolymer. Among them, polyethylene oxide, polypropylene oxide and a polyethylene oxide-polypropylene oxide block copolymer are preferred, and polyethylene oxide is most preferred.

In formula (c). R represents an organic group which does not have an active hydrogen atom. The organic group represented by R is not particularly restricted as long as it is an organic group which does not have an active hydrogen atom reacting with an isocyanate group. The organic group preferably includes an alkyl group, an aryl group and an acyl group, and more preferably includes an alkyl group, an aryl group and an acyl group.

The alkyl group represented by R is preferably an alkyl group having a total number of carbon atoms from 1 to 30, and particularly preferably an alkyl group having a total number of carbon atoms from 1 to 20. Specific examples of the alkyl group include a methyl group, an ethyl group, a butyl group, an isopropyl group, a benzyl group, an allyl group, an oleyl group and methoxyethyl group, and most preferably include a methyl group.

The aryl group represented by R is preferably an aryl group having a total number of carbon atoms from 6 to 30, and particularly preferably an aryl group having a total number of carbon atoms from 6 to 20. Specific examples of the aryl group include a phenyl group, a nonylphenyl group, an octylphenyl group and a methoxyphenyl group.

The acyl group represented by R may be an aliphatic acyl group or an aromatic acyl group, may have a substituent, or may have a branched structure, and is preferably an acyl group having a total number of carbon atoms from 2 to 30, and particularly preferably an acyl group having a total number of carbon atoms from 2 to 20. Specific examples of the acyl group include an acetyl group, a benzoyl group, a (meth)acryloyl group, an oleoyl group, a lauroyl group, a stearoyl group and a methoxybenzoyl group.

Of the groups represented by R, an alkyl group is preferred.

In formula (c), n represents an average addition mole number of polyether group from 10 to 120, preferably from 12 to 100.

Specific examples of the polyether derivative having a terminal amino group or a terminal hydroxy group represented by formula (c) are set forth below, but the invention should not be construed as being limited thereto.

$$R—O—(CH_2CHO)_n\text{-}X—A—Y$$

| No | R | -X-A-Y | n |
|---|---|---|---|
| C-1 | $CH_3$ | $—CH_2\text{-}CH_2OH$ | 90 |
| C-2 | $CH_3$ | $—CH_2\text{-}CH_2\text{-}OH$ | 23 |
| C-3 | *n*-$C_{18}H_{37}$ | $-CH_2\text{-}CH_2\text{-}OH$ | 30 |
| C-4 | 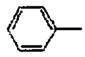 | $-CH_2\text{-}CH_2\text{-}OH$ | 30 |
| C-5 | $CH_3$ | 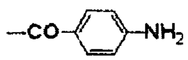 | 98 |
| C-6 | $CH_3$ | 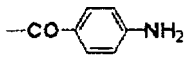 | 45 |
| C-7 | *n*-$C_{18}H_{37}$ | 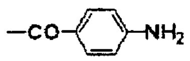 | 98 |
| C-8 | $CH_3$ | $-CO\text{-}CH_2\text{-}CH_2\text{-}NH_2$ | 98 |
| C-9 | $CH_3$ | $-SO_2\text{-}CH_2\text{-}CH_2\text{-}NH_2$ | 98 |
| C-10 | CH3 | $-CH_2\text{-}CH_2\text{-}$NH2 | 98 |

$$H_3C\text{- }O\text{- }(L\text{- }O)_n\text{- }CH_2CH_2\text{- }QH$$

| No | -(L-O)n- | n |
|---|---|---|
| C-11 | 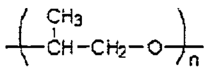 | 60 |
| C-12 | 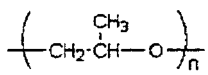 | 60 |
| C-13 | $-(CH_2CH_2CH_2-O)_n-$ | 60 |
| C-14 | $-(CH_2CH_2CH_2CH_2\text{-}O)_n-$ | 23 |

(continued)

| No | -(L-O)n- | n |
|---|---|---|
| C-15 | 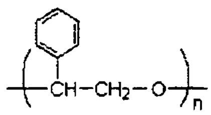 | 23 |
| C-16 | 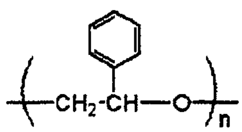 | 23 |

[Particle size and content of polymer fine particle]

The average particle size of the polymer fine particle is preferably from 0.01 to 3.0 μm, more preferably from 0.05 to 2.0 μm, and particularly preferably from 0.10 to 1.0 μm. In the range described above, good resolution and time lapse stability are obtained.

The content of the polymer fine particle is preferably in a range from 5 to 90% by weight based on the total solid content of the image-recording layer.

[(B) Radical polymerizable compound]

The radical polymerizable compound for use in the image-recording layer according to the invention is an addition-polymerizable compound having at least one ethylenically unsaturated double bond and it is selected from compounds having at least one, preferably two or more, terminal ethylenically unsaturated double bonds. The polymerizable compound has a chemical form, for example, a monomer, a prepolymer, specifically, a dimer, a trimer or an oligomer, or a mixture thereof.

Examples of the monomer include unsaturated carboxylic acids (for example, acrylic acid, methacrylic acid, itaconic acid, crotonic acid, isocrotonic acid or maleic acid) and esters or amides thereof. Preferably, esters of an unsaturated carboxylic acid with a Polyhydric alcohol compound and amides of an unsaturated carboxylic acid with a polyvalent amine compound are used. An addition reaction product of an unsaturated carboxylic acid ester or amide having a nucleophilic substituent, for example, a hydroxy group, an amino group or a mercapto group, with a monofunctional or polyfunctional isocyanate or epoxy compound, or a dehydration condensation reaction product of the unsaturated carboxylic acid ester or amide with a monofunctional or polyfunctional carboxylic acid is also preferably used. Moreover, an addition reaction product of an unsaturated carboxylic acid ester or amide having an electrophilic substituent, for example, an isocyanate group or an epoxy group with a monofunctional or polyfunctional alcohol, amine or thiol, or a substitution reaction product of an unsaturated carboxylic acid ester or amide having a releasable substituent, for example, a halogen atom or a tosyloxy group with a monofunctional or polyfunctional alcohol, amine or thiol is also preferably used.

In addition, compounds in which the unsaturated carboxylic acid described above is replaced by an unsaturated phosphonic acid, styrene, vinyl ether or the like can also be used. These compounds are described in literature references including JP- T- 2006- 508380 (the term "JP- T" as used herein means a published Japanese translation of a PCT patent application), JP- A- 2002- 287344, JP- A- 2008- 256850, JP- A- 2001- 342222; JP- A- 9- 179296, JP- A- 9- 179297, JP- A- 9- 179298, JP- A- 2004- 294935, JP- A- 2006- 243493, JP- A- 2002- 275129, JP- A- 2003- 64130, JP- A- 2003- 280187 and JP- A- 10- 333321.

Specific examples of the monomer, which is an ester of a polyhydric alcohol compound with an unsaturated carboxylic acid, include, as an acrylic acid ester, for example, ethylene glycol diacrylate, 1, 3- butanediol diacrylate, tetramethylene glycol diacrylate, propylene glycol diacrylate, trimethylolpropane triacrylate, hexanediol diacrylate, tetraethylene glycol diacrylate, pentaerythritol tetraacrylate, sorbitol triacrylate, isocyanuric acid ethylene oxide (EO) modified triacrylate and polyester acrylate oligomer. As a methacrylic acid ester, for example, tetramethylene glycol dimethacrylate, neopentyl glycol dimethacrylate, trimethylolpropane trimethacrylate, ethylene glycol dimethacrylate, pentaerythritol trimethacrylate, bis [p- (3- methacryloxy- 2- hydroxypropoxy) phenyl] dimethylmethane and bis [p- (methacryloxyethoxy) phenyl] dimethylmethane are exemplified. Specific examples of the monomer, which is an amide of a polyvalent amine compound with an unsaturated carboxylic acid, include methylene bisacrylamide, methylene bismethacrylamide, 1, 6-hexamethylene bisacrylamide, 1, 6- hexamethylene bismethacrylamide, diethylenetriamine trisacrylamide, xylylene bisacrylamide and xylylene bismethacrylamide.

Urethane type addition- polymerizable compounds produced using an addition reaction between an isocyanate and a hydroxy group are also preferably used and specific examples thereof include vinylurethane compounds having

two or more polymerizable vinyl groups per molecule obtained by adding a vinyl monomer containing a hydroxy group represented by formula (d) shown below to a polyisocyanate compound having two or more isocyanate groups per molecule, described in JP- B- 48- 417108 (the term "JP- B" as used herein means an "examined Japanese patent publication") .

$$CH_2{=}C\ (R^4)\ COOCH_2CH\ (R^5)\ OH \qquad (d)$$

wherein $R^4$ and $R^5$ each independently represents H or $CH_3$.

Also, urethane acrylates as described in JP- A- 51- 37193, JP- B- 2- 32293, JP- B- 2- 16765, JP- A- 2003- 344997 and JP- A- 2006- 65210, urethane compounds having an ethylene oxide skeleton described in JP- B- 58- 49860, JP- B- 56- 17654, JP- B- 62- 39417, JP- B- 62- 39418, JP- A- 2000- 250211 and JP- A- 2007- 94138, and urethane compounds having a hydrophilic group described in U.S. Patent 7, 153, 632, JP- T- 8- 505958, JP- A- 2007- 293221 and JP- A- 2007- 293223 are preferably used.

Of the compounds described above, an isocyanuric acid ethyleneoxide-modified acrylate, for example, tris (acryloyloxyethyl) isocyanurate or bis(acryloyloxyethyl) hydroxyethyl isocyanurate is particularly preferred from the standpoint of excellent balance between hydrophilicity relating to the on-press development property and polymerization ability relating to the printing durability.

Details of the method of using the radical polymerizable compound, for example, selection of the structure, individual or combination use or an amount added, can be appropriately determined in accordance with the characteristic design of the final lithographic printing plate precursor. The radical polymerizable compound is used preferably in a range from 5 to 75% by weight, more preferably in a range from 10 to 70% by weight, particularly preferably in a range from 15 to 60% by weight, based on the total solid content of the image-recording layer.

[(C) Infrared absorbing dye]

The infrared absorbing dye has a function of converting the infrared ray absorbed to heat and a function of being excited by the infrared ray to perform electron transfer and/or energy transfer to a radical polymerization initiator described hereinafter. The infrared absorbing dye for use in the invention is preferably a dye having an absorption maximum in a wavelength range from 760 to 1,200 nm.

As the dye, commercially available dyes and known dyes described in literatures, for example, Senryo Binran (Dye Handbook) compiled by The Society of Synthetic Organic Chemistry, Japan (1970) can be used. Specifically, the dyes includes azo dyes, metal complex azo dyes, pyrazolone azo dyes, naphthoquinone dyes, anthraquinone dyes, phthalocyanine dyes, carbonium dyes, quinoneimine dyes, methine dyes, cyanine dyes, squarylium dyes, pyrylium salts and metal thiolate complexes.

Of the dyes, cyanine dyes, squarylium dyes, pyrylium dyes, nickel thiolate complexes and indolenine cyanine dyes are particularly preferred. The cyanine dyes and indolenine cyanine dyes are more preferred. As particularly preferable examples of the dye, a cyanine dye represented by formula (e) shown below is exemplified.

Formula (e):

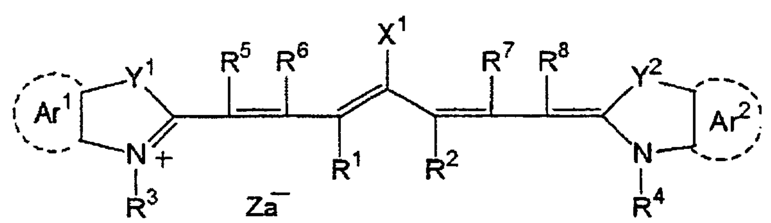

In formula (e), $X^1$ represents a hydrogen atom, a halogen atom, -N ($R^9$) ($R^{10}$), - $X^2$- $L^1$ or a group shown below. $R^9$ and $R^{10}$, which may be the same or different, each represents an aryl group having from 6 to 10 carbon atoms, which may have a substituent, an alkyl group having from 1 to 8 carbon atoms or a hydrogen atom or $R^9$ and $R^{10}$ may be combined with each other to from a ring, and preferably represents a phenyl group (- $NPh_2$) . $X^2$ represents an oxygen atom or a sulfur atom, $L^1$ represents a hydrocarbon group having from to 12 carbon atoms, a heteroaryl group or a hydrocarbon group having from 1 to 12 carbon atoms and containing a hetero atom. The term "hetero atom" as used herein means a nitrogen atom, a sulfur atom, an oxygen atom, a halogen atom or a selenium atom. In the group shown below, $Xa^-$ has the same meaning as $Za^-$ defined hereinafter, and $R^a$ represents a hydrogen atom or a substituent

selected from an alkyl group, an aryl group, a substituted or unsubstituted amino group and a halogen atom.

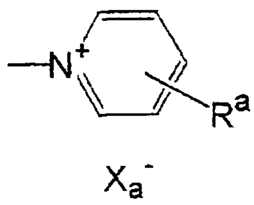

$R^1$ and $R^2$ each independently represents a hydrocarbon group having from 1 to 12 carbon atoms. In view of the preservation stability of a coating solution for image- recording layer, it is preferred that $R^1$ and $R^2$ each represents a hydrocarbon group having two or more carbon atoms. Further, $R^1$ and $R^2$ may be combined with each other to form a ring, and in case of forming the ring, to form a 5- membered ring or 6- membered ring is particularly preferred.

$Ar^1$ and $Ar^2$, which may be the same or different, each represents an aryl group which may have a substituent. Preferable examples of the aryl group include a benzene ring group and a naphthalene ring group. Preferable examples of the substituent include a hydrocarbon group having 12 or less carbon atoms, a halogen atom and an alkoxy group having 12 or less carbon atoms. $Y^1$ and $Y^2$, which may be the same or different, each represents a sulfur atom or a dialkylmethylene group having 12 or less carbon atoms. $R^3$ and $R^4$, which may be the same or different, each represents a hydrocarbon group having 20 or less carbon atoms, which may have a substituent. Preferable examples of the substituent include an alkoxy group having 12 or less carbon atoms, a carboxyl group and a sulfo group. $R^5$, $R^6$, $R^7$ and $R^8$, which may be the same or different, each represents a hydrogen atom or a hydrocarbon group having 12 or less carbon atoms. In view of the availability of raw materials, a hydrogen atom is preferred. Za represents a counter anion. However, $Za^-$ is not necessary when the cyanine dye represented by formula (e) has an anionic substituent in the structure thereof and neutralization of charge is not needed. Preferable examples of the counter ion for $Za^-$ include a halide ion, a perchlorate ion, a tetrafluoroborate ion, a hexafluorophosphate ion and a sulfonate ion, and particularly preferable examples thereof include a perchlorate ion, a hexafluorophosphate ion and an arylsulfonate ion, in view of the preservation stability of a coating solution for image- recording layer.

An infrared absorbing dye more preferably used in the invention includes a cyanine dye represented by formula (3) shown below.

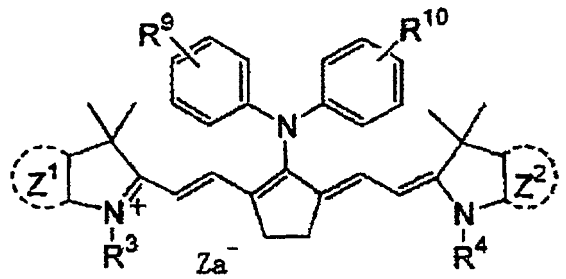

(3)

In formula (3), $Z^1$ and $Z^2$ each independently represents an aromatic ring which may have a substituent or a heteroaromatic ring which may have a substituent. Preferable examples of the aromatic ring include a benzene ring and a naphthalene ring. Preferable examples of the substituent include a hydrocarbon group having 12 or less carbon atoms, a halogen atom and an alkoxy group having 12 or less carbon atoms, and a hydrocarbon group having 12 or less carbon atoms or an alkoxy group having 12 or less carbon atoms is most preferred.

$R^3$ and $R^4$ each independently represents a hydrocarbon group having 20 or less carbon atoms which may have a substituent. Preferable examples of the substituent include an alkoxy group having 12 or less carbon atoms, a carboxyl group and a sulfo group.

$R^9$ and $R^{10}$ each independently represents a hydrogen atom or an alkoxy group which may have a substituent. $Za^-$ represents a counter anion which is present when neutralization of charge is necessary. Preferable examples of the counter ion for $Za^-$ include a halide ion, a perchlorate ion, a tetrafluoroborate ion, a hexafluorophosphate ion and a sulfonate ion, and particularly preferable examples thereof include a perchlorate ion, a hexafluorophosphate ion and an arylsulfonate ion in view of the preservation stability of a coating solution for image- recording layer.

Specific examples of the cyanine dye represented by formula (e), which can be preferably used in the invention, include compounds described in Paragraph Nos. [0017] to [0019] of JP- A- 2001- 133969, Paragraph Nos. [0016] to [0021] of JP- A- 2002- 23360 and Paragraph Nos. [0012] to [0037] of JP- A- 2002- 4063 8, preferably compounds

described in Paragraph Nos. [0034] to [0041] of JP- A- 2002- 278057 and Paragraph Nos. [0080] to [0086] of JP- A- 2008- 195018, and most preferably compounds described in Paragraph Nos. [0035] to [0043] of JP- A- 2007- 90850.

Also, compounds described in Paragraph Nos. [0008] to [0009] of JP- A- 5- 5005 and Paragraph Nos. [0022] to [0025] of JP- A- 2001- 222101 are preferably used.

The infrared absorbing dyes may be used only one kind or in combination of two or more kinds thereof and it may also be used together with an infrared absorbing pigment other than the infrared absorbing dye. As the pigment, compounds described in Paragraph Nos. [0072] to [0076] of JP- A- 2008- 195018 are preferred.

The content of the infrared absorbing dye in the image-recording layer according to the invention is preferably from 0.1 to 10.0% by weight, more preferably from 0.5 to 5.0% by weight, based on the total solid content of the image-recording layer.

[Radical polymerization initiator]

The image-recording layer according to the invention may contain a known radical polymerization initiator. The radical polymerization initiators include, for example, (a) an organic halide, (b) a carbonyl compound, (c) an azo compound, (d) an organic peroxide, (e) a metallocene compound, (f) an azido compound, (g) a hexaarylbiimidazole compound, (h) an organic borate compound, (i) a disulfone compound, (j) an oxime ester compound and (k) an onium salt compound. Among them, a sulfonium salt, an iodonium salt, a diazonium salt, an azinium salt, an oxide compound and a triazine compound are exemplified.

Specific examples thereof include compounds described in JP- A- 2008- 195018.

The radical polymerization initiator can be added to the image-recording layer preferably in an amount from 0.1 to 50% by weight, more preferably from 0.5 to 30% by weight, particularly preferably from 0.8 to 20% by weight, based on the total solid content of the image-recording layer.

[Binder polymer]

In the image-recording layer according to the invention, a binder polymer can be used for the purpose of improving film strength of the image-recording layer. The binder polymer which can be used in the invention can be selected from those heretofore known without restriction, and polymers having a film-forming property are preferred. Among them, acrylic resins, polyvinyl acetal resins and polyurethane resins are preferred.

As the binder polymer preferable for the invention, a polymer having a crosslinkable functional group for improving film strength of the image area in its main chain or side chain, preferably in its side chain, as described in JP-A- 2008- 195018 is exemplified. Due to the crosslinkable functional group, crosslinkage is formed between the polymer molecules to facilitate curing.

As the crosslinkable functional group, an ethylenically unsaturated group, for example, a (meth)acryl group, a vinyl group, an allyl group or a styryl group or an epoxy group is preferred. The crosslinkable functional group can be introduced into the polymer by a polymer reaction or copolymerization. For instance, a reaction between an acrylic polymer or polyurethane having a carboxyl group in its side chain and glycidyl methacrylate or a reaction between a polymer having an epoxy group and a carboxylic acid having an ethylenically unsaturated group, for example, methacrylic acid can be utilized.

The content of the crosslinkable functional group in the binder polymer is preferably from 0.1 to 10.0 mmol, more preferably from 0.25 to 7.0 mmol, most preferably from 0.5 to 5.5 mmol, based on 1 g of the binder polymer.

It is also preferred that the binder polymer for use in the invention further contains a hydrophilic group. The hydrophilic group contributes to impart the on-press development property to the image-recording layer. In particular, coexistence of the crosslinkable functional group and the hydrophilic group makes it possible to maintain good balance between printing durability and developing property.

The hydrophilic group includes, for example, a hydroxy group, a carboxyl group, an alkylene oxide structure, an amino group, an ammonium group, an amido group, a sulfo group and a phosphoric acid group. Among them, an alkylene oxide structure containing from 1 to 9 alkylene oxide units having 2 or 3 carbon atoms is preferred. In order to introduce a hydrophilic group into the binder polymer, a monomer having the hydrophilic group may be copolymerized.

In order to control the ink-receptive property, an oleophilic group, for example, an alkyl group, an aryl group, an aralkyl group or an alkenyl group may be introduced into the binder polymer according to the invention. Specifically, an oleophilic group-containing monomer, for example, an alkyl methacrylate may be copolymerized.

Specific examples (1) to (11) of the binder polymer for use in the invention are set forth below, but the invention should not be construed as being limited thereto. A ratio of the repeating unit in the binder polymer shown below is indicated by a molar ratio.

(1) 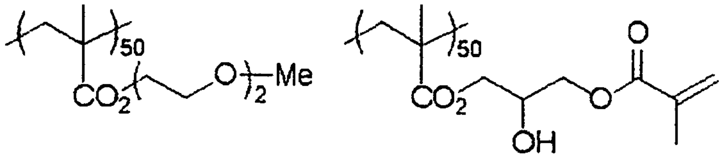

(2) 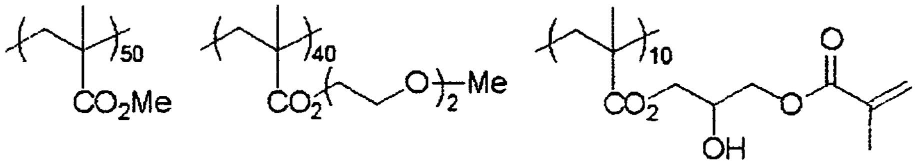

(3) 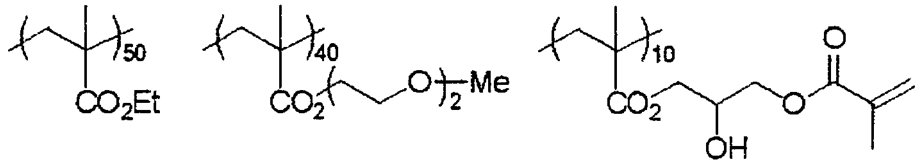

(4) 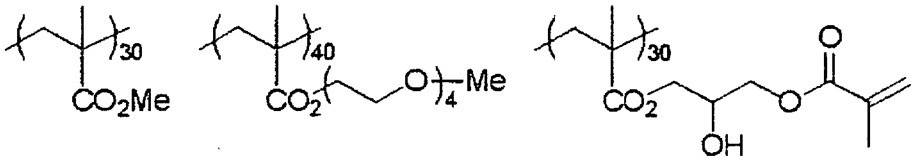

(5) 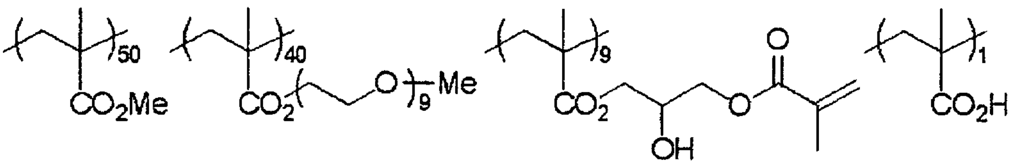

(6) 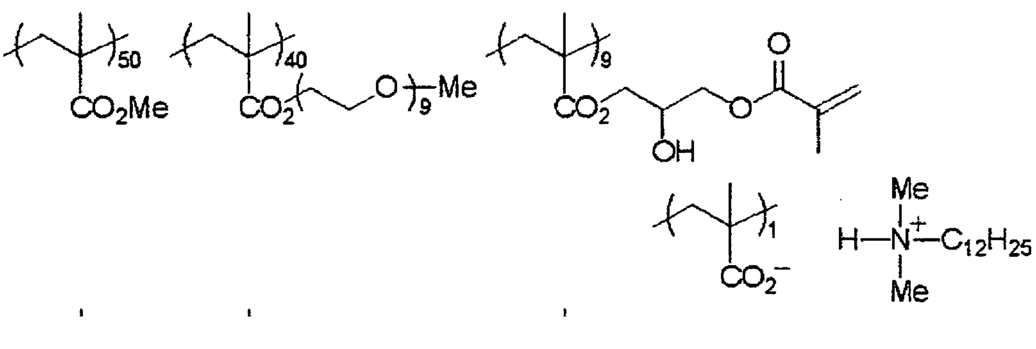

(7) 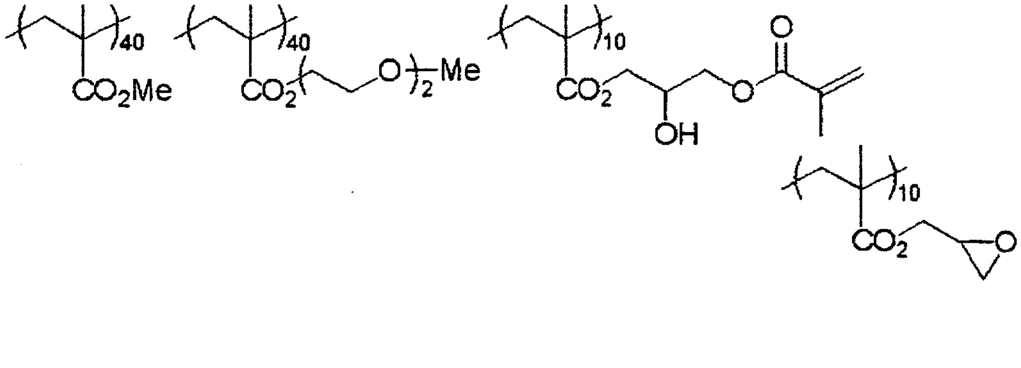

(8) 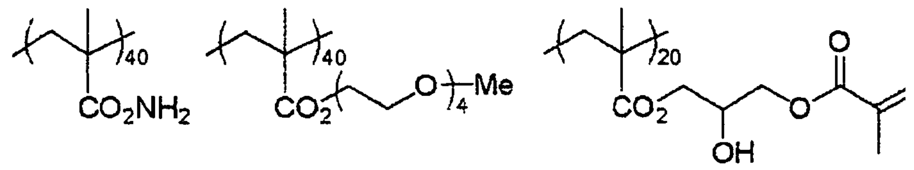

(9) 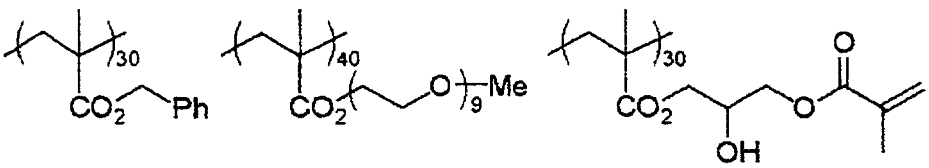

(10) 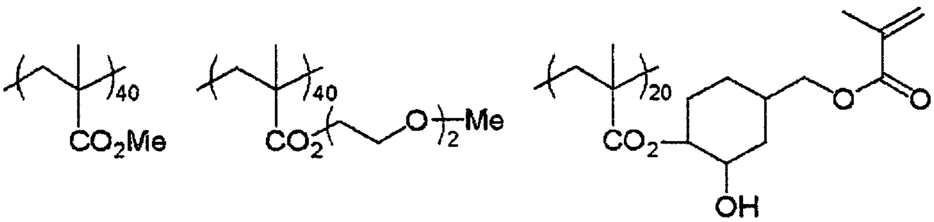

(11) 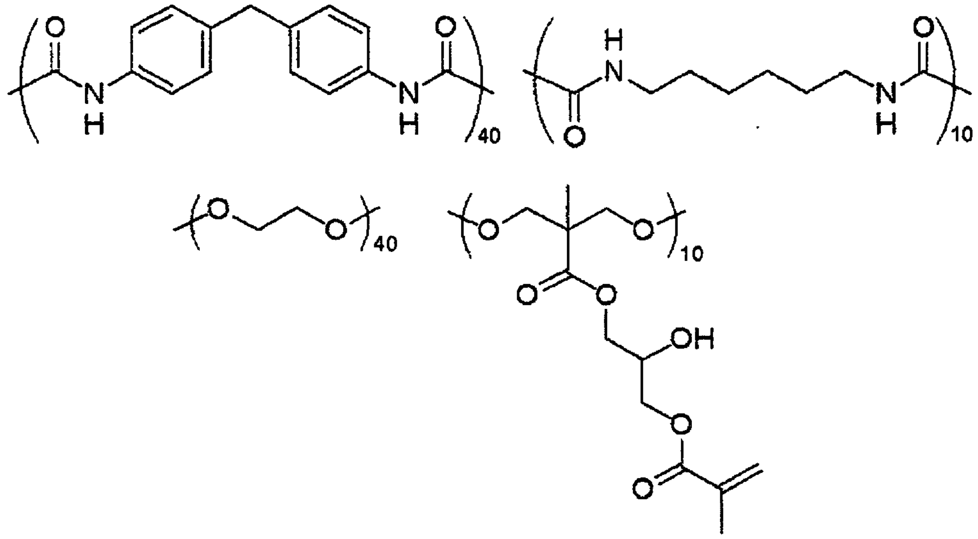

The weight average molecular weight (Mw) of the binder polymer according to the invention is preferably 2,000 or more, more preferably 5,000 or more, and still more preferably from 10,000 to 300,000.

[Other components]

The image-recording layer according to the invention may further contain the components shown below, if desired.

(1) Hydrophilic low molecular weight compound

The image-recording layer according to the invention may contain a hydrophilic low molecular weight compound in order to improve the on-press development property without accompanying the decrease in the printing durability.

The hydrophilic low molecular weight compound includes a water- soluble organic compound, for example, a glycol compound, e.g., ethylene glycol, diethylene glycol, triethylene glycol, propylene glycol, dipropylene glycol or tripropylene glycol, or an ether or ester derivative thereof, a polyol compound, e.g., glycerine, pentaerythritol or tris (2-hydroxyethyl) isocyanurate, an organic amine compound, e.g., triethanol amine, diethanol amine or monoethanol amine, or a salt thereof, an organic sulfonic acid compound, e.g., an alkyl sulfonic acid, toluene sulfonic acid or benzene sulfonic acid, or a salt thereof, an organic sulfamic acid compound, e.g., an alkyl sulfamic acid, or a salt thereof, an organic sulfuric acid compound, e.g., an alkyl sulfuric acid or an alkyl ether sulfuric acid, or a salt thereof, an organic phosphonic acid compound, e.g., phenyl phosphonic acid, or a salt thereof, an organic carboxylic acid, e.g., tartaric acid, oxalic acid, citric acid, malic acid, lactic acid, gluconic acid or an amino acid, or a salt thereof and a betaine compound.

According to the invention, it is preferred to incorporate at least one compound selected from a polyol compound, an organic sulfate compound, an organic sulfonate compound and a betaine compound into the image-recording layer.

Specific examples of the organic sulfonate compound include an alkylsulfonate, for example, sodium n- butylsulfonate, sodium n- hexylsulfonate, sodium 2- ethylhexylsulfonate, sodium cyclohexylsulfonate or sodium n- octylsulfonate; an alkylsulfonate containing an ethylene oxide chain, for example, sodium 5, 8, 11.- trioxapentadecane- 1-sulfonate, sodium 5, 8, 11- trioxaheptadecane- 1- sulfonate, sodium 13- ethyl- 5, 8, 11- trioxaheptadecane- 1- sulfonate or sodium 5, 8, 11, 14- tetraoxatetracosane- I- sulfonate; an arylsulfonate, for example, sodium benzenesulfonate, sodium p- toluenesulfonate, sodium p- hydroxybenzenesulfonate, sodium p- styrenesulfonate, sodium isophthalic acid dimethyl- 5- sulfonate, sodium 1- naphtylsulfonate, sodium 4- hydroxynaphtylsulfonate, disodium 1, 5- naphthalenedisulfonate or trisodium 1, 3, 6- naphthalenetrisulfonate, and compounds described in Paragraph Nos. [0026] to [0031] of JP- A- 2007- 276454 and Paragraph Nos. [0020] to [0047] of JP- A- 2009- 154525. The salt may also be potassium salt or lithium salt.

The organic sulfate compound includes a sulfate of alkyl, alkenyl, alkenyl, aryl or heterocyclic monoether of polyethylene oxide. The number of ethylene oxide unit is preferably from 1 to 4. The salt is preferably a sodium salt, a potassium salt or a lithium salt. Specific examples thereof include compounds described in Paragraph Nos. [0034] to [0038] of JP- A- 2007- 276454.

As the betaine compound, a compound wherein a number of carbon atoms included in a hydrocarbon substituent on the nitrogen atom is from 1 to 5 is preferred. Specific examples thereof include trimethylammonium acetate, dimethylpropylammonium acetate, 3- hydroxy- 4- trimethylammoniobutyrate, 4- (1- pyridinio) butyrate, 1- hydroxyethyl- 1-imidazoliacetate, trimethylammonium methanesulfonate, dimethylpropylammonium methanesulfonate, 3- trimethylammonio- 1- porpanesulfonate and 3- (1- pyridinio)- 1- porpanesulfonate.

Since the hydrophilic low molecular weight compound has a small structure of hydrophobic portion and almost no surface active function, degradations of the hydrophobicity and film strength in the image area due to penetration of dampening water into the exposed area (image area) of the image-recording layer are prevented and thus, the ink receptive-property and printing durability of the image-recording layer can be preferably maintained.

The amount of the hydrophilic low molecular weight compound added to the image-recording layer is preferably from 0.5 to 20% by weight, more preferably from 1 to 15% by weight, still more preferably from 2 to 10% by weight, based on the total solid content of the image-recording layer. In the range described above, good on-press development property and printing durability are obtained.

The hydrophilic low molecular weight compounds may be used individually or as a mixture of two or more thereof

(2) Oil-sensitizing agent

In order to improve the ink-receptive property, an oil-sensitizing agent, for example, a phosphonium compound, a nitrogen-containing low molecular weight compound or an ammonium group-containing polymer can be used in the image-recording layer. In particular, in the case where an inorganic stratiform compound is incorporated into a protective layer, the oil-sensitizing agent functions as a surface covering agent of the inorganic stratiform compound and prevents deterioration of the ink-receptive property during printing due to the inorganic stratiform compound.

As preferable examples of the phosphonium compound, phosphonium compounds described in JP- A- 2006-297907 and JP- A- 2007- 50660 are exemplified. Specific examples of the phosphonium compound include tetrabutylphosphonium iodide, butyltriphenylphosphonium bromide, tetraphenylphosphonium bromide, 1, 4- bis (triphenylphosphonio) butane di (hexafluorophosphate), 1, 7- bis (triphenylphosphonio) heptane sulfate and 1, 9- bis (triphenylphasphanio) nonane naphthalene- 2, 7- disulfonate.

As the nitrogen- containing low molecular weight compound, an amine salt and a quaternary ammonium salt are exemplified. Also, an imidazolinium salt, a benzimidazolinium salt, a pyridinium salt and a quinolinium salt are exemplified. Of the nitrogen- containing low molecular weight compounds, the quaternary ammonium salt and pyridinium salt are preferably used. Specific examples the nitrogen- containing low molecular weight compound include tetramethylammonium hexafluorophosphate, tetrabutylammonium hexafluorophosphate, dodecyltrimethylammonium p- toluenesulfonate, benzyltriethylammonium hexafluorophosphate, benzyldimethyloctylammonium hexafluorophosphate, benzyldimethyldodecylammonium hexafluorophosphate and compounds described in Paragraph Nos. [0021] to [0037] of JP- A- 2008- 284858 and Paragraph Nos. [0030] to [0057] of JP- A- 2009- 90645.

The ammonium group- containing polymer may be any polymer containing an ammonium group in its structure

and is preferably a polymer containing from 5 to 80% by mole of (meth) acrylate having an ammonium group in its side chain as a copolymerization component. Specific examples thereof include polymers described in Paragraph Nos. [0089] to [0105] of JP- A- 2009- 208458.

As to the ammonium group-containing polymer, its reduced specific viscosity value (unit: ml/g) determined according to the measuring method described below is preferably from 5 to 120, more preferably from 10 to 110, particularly preferably from 15 to 100. When the reduced specific viscosity value described above is calculated in terms of weight average molecular weight (Mw), from 10,000 to 150,000 is preferred, from 17,000 to 140,000 is more preferred, and 20,000 to 130,000 is particularly preferred.

<Measuring method of reduced specific viscosity>

In a 20 ml measuring flask was weighed a polymer of I g as a solid content and the measuring flask was filled up to the gauge line with N-methyl pyrrolidone. The resulting solution was allowed to stand in a thermostatic bath of 30°C for 30 minutes and put into an Ubbelohde viscometer (viscometer constant: 0.010 cSt/s) and a period for running down of the solution at 30°C was measured. The measurement was conducted twice for the same sample and an average value of the measurement was determined. The measurement was also conducted for a blank (only N-methyl pyrrolidone) in the same manner. The reduced specific viscosity was calculated according to the formula shown below.

$$\text{Reduced specific viscosity (ml/g)} = \frac{\dfrac{\text{Period for running down of sample solution (sec)} - \text{Period for running down of blank (sec)}}{\text{Period for running down of blank (sec)}}}{\dfrac{3.33\ (g) \times \dfrac{30}{100}}{20\ (ml)}}$$

Specific examples of the ammonium group-containing polymer are set forth below.

(1) 2- (Trimethylammonio) ethyl methacrylate p- toluenesulfonate/ 3, 6- dioxaheptyl methacrylate copolymer (molar ratio: 10/90, Mw: 45, 000)
(2) 2- (Trimethylammonio) ethyl methacrylate hexafluorophosphate /3, 6- dioxaheptyl methacrylate copolymer (molar ratio: 20/80, Mw: 60, 000)
(3) 2- (Ethyldimethylammonio) ethyl methacrylate p- toluenesulfonate/ hexyl methacrylate copolymer (molar ratio: 30/70, Mw: 45, 000)
(4) 2- (Trimethylammonio) ethyl methacrylate hexafluorophosphate /2- ethylhexyl methacrylate copolymer (molar ratio: 20/80, Mw: 60, 000)
(5) 2- (Trimethylammonio) ethyl methacrylate methylsulfate/ hexyl methacrylate copolymer (molar ratio: 40/60, Mw: 70, 000)
(6) 2- (Butyldimethylammonio) ethyl methacrylate hexafluorophosphate/ 3, 6- dioxaheptyl methacrylate copolymer (molar ratio: 25/75, Mw: 65, 000)
(7) 2- (Butyldimethylammonio) ethyl acrylate hexafluorophosphate/ 3, 6- dioxaheptyl methacrylate copolymer (molar ratio: 20/80, Mw: 65, 000)
(8) 2- (Butyldimethylammonio) ethyl methacrylate 13- ethyl- 5, 8, 11- trioxa- 1- heptadecanesulfonate/ 3, 6- dioxaheptyl methacrylate copolymer (molar ratio: 20/80, Mw: 75, 000)
(9) 2- (Butyldimethylammonio) ethyl methacrylate hexafluorophosphate/ 3, 6- dioxaheptyl methacrylate/ 2- hydroxy-3- methacryloyloxypropyl methacrylate copolymer (molar ratio: 15/80/5, Mw: 65, 000)

The content of the oil-sensitizing agent is preferably from 0.01 to 30.0% by weight, more preferably from 0.1 to 15.0% by weight, still more preferably from 1 to 10% by weight, based on the total solid content of the image-recording layer.

(3) Others

Other components, for example, a surfactant, a coloring agent, a print- out agent, a polymerization inhibitor, a

higher fatty acid derivative, a plasticizer, an inorganic fine particle, an inorganic stratiform compound, a sensitizing auxiliary or a chain transfer agent may be added to the image- recording layer. Specifically, compounds and amounts added thereof described, for example, in Paragraph Nos. [0114] to [0159] of JP- A- 2008- 284817, Paragraph Nos. [0023] to [0027] of JP- A- 2006- 91479 and Paragraph No. [0060] of U.S. Patent Publication No. 2008/0311520 are preferably used.

[Formation of image-recording layer]

The image- recording layer according to the invention is formed by dispersing or dissolving each of the necessary constituting components described above in a solvent to prepare a coating solution and coating the solution on a support by a known method, for example, bar coater coating and drying as described in Paragraph Nos. [0142] to [0143] of JP-A- 2008- 195018. The coating amount (solid content) of the image- recording layer formed on a support after coating and drying may be varied according to the intended purpose but is in general preferably from 0.3 to 3.0 g/$m^2$. In the range described above, good sensitivity and good film property of the image- recording layer can be obtained.

[Undercoat layer]

In the lithographic printing plate precursor according to the invention, an undercoat layer (also referred to as an intermediate layer) is preferably provided between the image-recording layer and the support. The undercoat layer strengthens adhesion between the support and the image-recording layer in the exposed area and makes removal of the image-recording layer from the support easy in the unexposed area, thereby contributing improvement in the developing property without accompanying degradation of the printing durability. Further, it is advantageous that in the case of infrared laser exposure, since the undercoat layer acts as a heat insulating layer, decrease in sensitivity due to diffusion of heat generated upon the exposure into the support is prevented.

As a compound for use in the undercoat layer, a compound having an acid group, for example, a phosphonic acid, a phosphoric acid or a sulfonic acid is preferably used. Further, a compound having an adsorbing group capable of adsorbing to a surface of support and a crosslinkable group for improving an adhesion property to the image-recording layer is preferred. The compound may be a low molecular weight compound or a polymer compound. The compounds may be used in mixture of two or more thereof, if desired.

As the polymer compound, a copolymer of a monomer having an adsorbing group, a monomer having a hydrophilic group and a monomer having a crosslinkable group is preferred. As the adsorbing group capable of adsorbing to a surface of support, a phenolic hydroxy group, a carboxyl group, $-PO_3H_2$, $-OPO_3H_2$.- $CONHSO_2$-, - $SO_2NHSO_2$- or-$COCH_2COCH_3$ is preferred. As the hydrophilic group, a sulfo group is preferred. As the crosslinkable group, for example, a methacryl group or an allyl group is preferred. The polymer compound may contain a crosslinkable group introduced by a salt formation between a polar substituent of the polymer compound and a compound containing a substituent having a counter charge to the polar substituent of the polymer compound and an ethylenically unsaturated bond and also may be further copolymerized with a monomer other than those described above, preferably a hydrophilic monomer.

Specifically, a silane coupling agent having an addition- polymerizable ethylenic double bond reactive group described in JP- A- 10- 282679 and a phosphorus compound having an ethylenic double bond reactive group described in JP- A- 2- 304441 are preferably exemplified. Low molecular weight compounds or polymer compounds having a crosslinkable group (preferably an ethylenically unsaturated bond group), a functional group capable of interacting with a surface of support and a hydrophilic group described in JP- A- 2005- 238816, JP- A- 2005- 125749, JP- A- 2006-239867 and JP- A- 2006- 215263 are also preferably used. Polymer compounds having an adsorbing group capable of adsorbing to a surface of support, a hydrophilic group and a crosslinkable group described in JP- A- 2005- 125749 and JP- A- 2006- 188038 are more preferred.

The content of the unsaturated double bond in the polymer compound for undercoat layer is preferably from 0.1 to 10.0 mmol, most preferably from 0.2 to 5.5 mmol, based on 1 g of the polymer compound.

The weight average molecular weight of the polymer compound for undercoat layer is preferably 5,000 or more, and more preferably from 10,000 to 300,000.

The undercoat layer according to the invention may contain a chelating agent, a secondary or tertiary amine, a polymerization inhibitor or a compound containing an amino group or a functional group having polymerization inhibition ability and a group capable of interacting with a surface of aluminum support (for example, 1, 4- diazabicyclo [2, 2, 2] octane (DABCO), 2, 3, 5, 6- tetrahydroxy- p- quinone, chloranil, sulfophthalic acid, hydroxyethylethylenediaminetriacetic acid, dihydroxyethylethylenediaminediacetic acid or hydroxyethyliminodiacetic acid) in addition to the compound for the undercoat layer described above in order to prevent the occurrence of stain due to preservation of the lithographic printing plate precursor.

The undercoat layer is coated according to a known method. The coating amount (solid content) of the undercoat layer is preferably from 0.1 to 100 mg/$m^2$, and more preferably from1 to 3O mg/$m^2$.

[Support]

As the support for use in the lithographic printing plate precursor according to the invention, a known support is used. Particularly, an aluminum plate subjected to roughening treatment and anodizing treatment according to a known method is preferred.

Also, an enlarging treatment or a sealing treatment of micropores of the anodized film described in JP- A- 2001- 253181 and JP- A- 2001- 322365 or a surface hydrophilizing treatment, for example, with an alkali metal silicate as described in U.S. Patents 2, 714, 066, 3, 181, 461, 3, 280, 734 and 3, 902, 734 or polyvinyl phosphonic acid as described in U.S. Patents 3, 276, 868, 4, 153, 461 and 4, 689, 272 may be appropriately selected and applied to the aluminum plate, if desired.

The support preferably has a center line average roughness from 0.10 to 1.2 μm.

The support according to the invention may have a backcoat layer containing an organic polymer compound described in JP- A- 5- 45885 or an alkoxy compound of silicon described in JP- A- 6- 35174, provided on the back surface thereof, if desired.

(Protective layer)

In the lithographic printing plate precursor according to the invention, it is preferred to provide a protective layer (overcoat layer) on the image-recording layer. The protective layer has a function for preventing, for example, occurrence of scratch in the image-recording layer or ablation caused by exposure with a high illuminance laser beam, in addition to the function for restraining an inhibition reaction against the image formation by means of oxygen blocking.

With respect to the protective layer having such properties, there are described, for example, in U.S. Patent 3, 458, 311 and JP- B- 55- 49729. As a polymer having low oxygen permeability for use in the protective layer, any water-soluble polymer and water- insoluble polymer can be appropriately selected to use. The polymers may be used in mixture of two or more thereof, if desired. Specifically, for example, polyvinyl alcohol, a modified polyvinyl alcohol, polyvinyl pyrrolidone, a water- soluble cellulose derivative and poly (meth) acrylonitrile are exemplified.

As the modified polyvinyl alcohol, an acid- modified polyvinyl alcohol having a carboxyl group or a sulfo group is preferably used. Specifically, modified polyvinyl alcohols described in JP- A- 2005- 250216 and JP- A- 2006- 259137 are preferably exemplified.

It is also preferred for the protective layer to contain an inorganic stratiform compound, for example, natural mica or synthetic mica as described in JP- A- 2005- 119273 in order to increase the oxygen blocking property.

Further, the protective layer may contain a known additive, for example, a plasticizer for imparting flexibility, a surfactant for improving a coating property or a fine inorganic particle for controlling a surface slipping property. The oil-sensitizing agent described with respect to the image- recording layer may also be incorporated into the protective layer.

The protective layer is coated according to a known method. The coating amount of the protective layer is preferably in a range from 0.01 to 10 $g/m^2$, more preferably in a range from 0.02 to 3 $g/m^2$, most preferably in a range from 0.02 to 1 $g/m^2$, in terms of the coating amount after drying.

The adhesion property of the protective layer to the image- recording layer and scratch resistance are also extremely important in view of handling of the lithographic printing plate precursor. Specifically, when a hydrophilic layer comprising a water- soluble polymer is laminated on the oleophilic image- recording layer, layer peeling due to an insufficient adhesion property is liable to occur, and the peeled portion causes such a defect as failure in curing of the image- recording layer due to polymerization inhibition by oxygen. Various proposals have been made for improving the adhesion property between the image- recording layer and the protective layer. For example, it is described in JP- B- 54- 12215 and BP- A- 1303578 that a sufficient adhesion property can be obtained by mixing from 20 to 60% by weight of an acryl- based emulsion or a water- insoluble vinyl pyrrolidone/ vinyl acetate copolymer with a hydrophilic polymer mainly comprising polyvinyl alcohol and laminating the resulting mixture on the image- recording layer. Any of these known techniques can be applied to the protective layer according to the invention. Coating methods of the protective layer are described in detail, for example, in U.S. Patent 3, 458, 311 1 and JP- B- 55- 49729.

plate making method]

The lithographic printing plate precursor according to the invention is exposed imagewise and subjected to development in a development processing step to be provided for printing or is exposed imagewise and without undergoing the development processing, subjected to no-press development by supplying printing ink and dampening water to conduct on-press development, thereby being provided for printing as it is. The plate making method according to the invention is described in detail below.

[Exposure]

As the light source used for the imagewise exposure in the invention, a laser is preferred. The laser for use in the invention preferably includes a solid laser emitting an infrared ray having a wavelength from 760 to 1,200 nm.
With respect to the infrared laser, the output is preferably 100 raw or more, the exposure time per pixel is preferably within 20 microseconds, and the irradiation energy is preferably from 10 to 300 mJ/$cm^2$. In order to shorten the exposure time, it is preferred to use a multibeam laser device.

[Development processing]

The development processing of the lithographic printing plate precursor according to the invention can be conducted by a known method. A known developer which is an aqueous solution containing a component selected from a surfactant, an organic solvent, an alkali agent, a water-soluble polymer compound, a preservative, a chelating agent, a defoaming agent, an organic acid, an inorganic acid, an inorganic salt and the like is used. An aqueous solution having pH of less than 10 can also be used. In such a case, a developer containing a surfactant and/or a water-soluble polymer compound is preferred. An oil-desensitizing solution which is ordinarily used for protecting the surface of printing plate after development of a lithographic printing plate precursor may also be used. According to the invention, the lithographic printing plate after development processing may be appropriately subjected to water washing, drying treatment or oil-desensitizing treatment. In the oil-desensitizing treatment, a known oil-desensitizing solution can be used.
A lithographic printing plate obtained by conducting the development processing described above is mounted on an offset printing machine to use for printing a large number of sheets.

[On-press development]

The exposed lithographic printing plate precursor is mounted on a plate cylinder of a printing machine. In case of using a printing machine equipped with a laser exposure apparatus, the lithographic printing plate precursor is mounted on a plate cylinder of the printing machine and then subjected to the imagewise exposure.
After the imagewise exposure of the lithographic printing plate precursor with an infrared laser or the like, without undergoing a development processing step, for example, a wet type development processing step, when printing ink and dampening water are supplied to perform printing, in the exposed area of the image-recording layer, the image-recording layer cured by the exposure forms the printing ink receptive area having the oleophilic surface. On the other hand, in the unexposed area, the uncured image-recording layer is removed by dissolution or dispersion with the dampening water and/or printing ink supplied to reveal the hydrophilic surface in the area. As a result, the dampening water adheres onto the revealed hydrophilic surface and the printing ink adheres onto the exposed area of the image-recording layer, whereby printing is initiated.
While either the dampening water or printing ink may be supplied at first on the surface of lithographic printing plate precursor, it is preferred to supply the printing ink at first in view of preventing the dampening water front contamination with the component of the image-recording layer removed. As the dampening water and printing ink, dampening water and printing ink for conventional lithographic printing can be used, respectively.
Thus, the lithographic printing plate precursor is subjected to the on- press development on an offset printing machine and used as it is for printing a large number of sheets.

EXAMPLES

The present invention will be described in more detail with reference to the following examples, but the invention should not be construed as being limited thereto. In the examples, with respect to a polymer compound, a molecular weight is expressed as a weight average molecular weight (Mw) and a ratio of repeating unit is expressed in molar percentage, unless otherwise indicated specifically.

[Synthesis examples of Polyvalent isocyanate adducts NCO-1 to NCO-21]

Synthesis Example 1: Synthesis of NCO-1 I

To a suspension solution containing 355.6 g (1.60 mol) of isophorone diisocyanate (IPDI) and 169.6 g (0.40 mol) of Polyhydric phenol compound P-2 having the structure shown below in 470.7 g of ethyl acetate was dropwise added a solution containing 471 mg of stannous octoate (STANOCT, produced by Yoshitomi Pharmaceutical Co., Ltd.) dissolved in 10 g of ethyl acetate with stirring over a period of one hour. After the completion of the dropwise addition, the stirring was continued for 2 hours and then the stirring was conducted at 50°C for 3 hours. Thus, a solution of

Polyvalent isocyanate adduct NCO-I (concentration: 50% by weight) was obtained.

The terminal isocyanate compound obtained above was subjected to dibutyl-ureidation with dibutylamine to determine a weight average molecular weight (as calculated in terms of polystyrene) and the Mw thereof was 24,400.

The compound obtained was subjected to identification by FT-IR (KBr). The data are shown below. FT-IR (KBr) 3416 $cm^{-1}$, 2956 $cm^{-1}$ 2262 $cm^{-1}$, 1738 $cm^{-1}$, 1499 $cm^{-1}$ 1364 $cm^{-1}$ 1307 $cm^{-1}$ 1211 $cm^{-1}$, 1014 $cm^{-1}$, 853 $cm^{-1}$, 576 $cm^{-1}$

Polyhydric phenol compound P-2

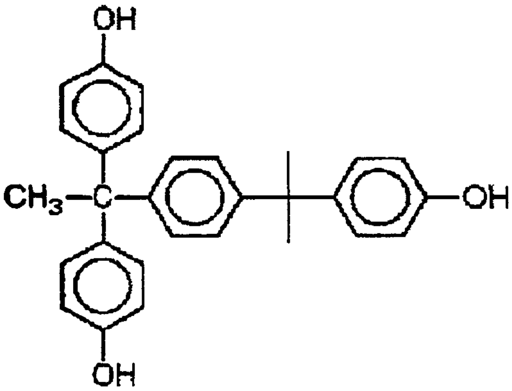

(I/O=0.62)

Synthesis Examples 2 to 16: Synthesis of NCO-2 to NCO-16

Solutions of Polyvalent isocyanate adducts NCO-2 to NOC-16 were obtained in the same manner as described in Synthesis Example 1 except for changing Polyhydric phenol compound P-2 to the compound shown in Table I below and changing the ratio thereof to isophorone diisocyanate (IPDI) to the value shown in Table I below, respectively.

The compound NCO-5 obtained was subjected to identification by FT-IR (KBr). The data are shown below. FT-IR (KBr) 3418 $cm^{-1}$ , 2955 $cm^{-1}$, 2263 $cm^{-1}$, 1734 $cm^{-1}$, 1519 $cm^{-1}$, 1477 $cm^{-1}$, 1364 $cm^{-1}$, 1305 $cm^{-1}$, 1195 $cm^{-1}$ 1069$cm^{-1}$, 997 $cm^{-1}$, 761 $cm^{-1}$ 578 $cm^{-1}$

Synthesis Examples 17 to 21: Synthesis of NCO-17 to NCO-21

Solutions of Polyvalent isocyanate adducts NCO-17 to NOC-21 were obtained in the same manner as described in Synthesis Example 1 except for changing the polyhydric phenol compound and isophorone diisocyanate (IPDI) to the compounds shown in Table 2 below, respectively.

TABLE I

| Polymer Fine Particle | Polyvalent Isocyanate Adduct | Polyhydric Phenol Compound | Polyhydric Phenol Compound/IPDI (in molar ratio) | Mw of Dibutylamine Adduct |
|---|---|---|---|---|
| CP-1 | NCO-1 | P-2 | 1/4 | 24,400 |
| CP-2 | NCO-2 | P-5 | 1/4 | 23,500 |
| CP-3 | NCO-3 | P-8 | 1/5 | 32,300 |
| CP-4 | NCO-4 | P-14 | 1/4 | 12,100 |
| CP-5 | NCO-5 | PS-16 | 1/4 | 24,800 |
| CP-6 | NCO-6 | PS-16 | 1/3.5 | 26,400 |
| CP-7 | NCO-7 | PS-16 | 1/3 | 32,000 |

(continued)

| Polymer Fine Particle | Polyvalent Isocyanate Adduct | Polyhydric Phenol Compound | Polyhydric Phenol Compound/IPDI (in molar ratio) | Mw of Dibutylamine Adduct |
|---|---|---|---|---|
| CP-8 | NCO-8 | PS-16 | 1/4.5 | 22,600 |
| CP-9 | NCO-9 | PS-16 | 1/5 | 21,000 |
| CP-10 | NCO-10 | PS-16 | 1/6 | 20,000 |
| CP-11 | NCO-11 | PS-22 | 1/4 | 28,000 |
| CP-12 | NCO-12 | PS-17 | 1/4 | 25,000 |
| CP-13 | NCO-13 | 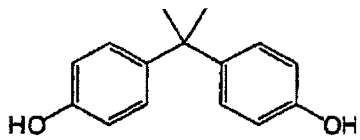 | 1/3 | 3,000 |
| CP-14 | NCO-14 | 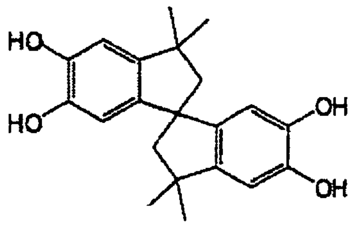 | 1/5 | 34,200 |
| CP-15 | NCO-15 | 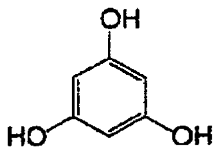 | 1/4 | 21,000 |
| CP-16 | NCO-16 | 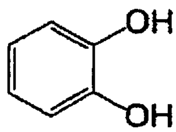 | 1/3 | 1,800 |

TABLE 2

| Polymer Fine Particle | Polyvalent Isocyanate Adduct | Polyhydric Phenol Compound | Isocyanate Compound in place of IPDI | Polyhydric Phenol Compound/ Isocyanate Compound (in molar ratio) | Mw of Dibutylamine Adduct |
|---|---|---|---|---|---|
| CP-17 | NCO-17 | P-2 | m-Xylylene diisocyanate | 1/4 | 22,300 |
| CP-18 | NCO-18 | PS-16 | m-Xylylene diisocyanate | 1/4 | 23,300 |
| CP-19 | NCO-19 | P-2 | 2,4-Tolylene diisocyanate | 1/4 | 31,900 |
| CP-20 | NCO-20 | P-2 | 1,3-Bis (isocyanatomethyl) cyclohexane | 1/4 | 28,100 |

(continued)

| Polymer Fine Particle | Polyvalent Isocyanate Adduct | Polyhydric Phenol Compound | Isocyanate Compound in place of IPDI | Polyhydric Phenol Compound/ Isocyanate Compound (in molar ratio) | Mw of Dibutylamine Adduct |
|---|---|---|---|---|---|
| CP-21 | NCO-21 | P-2 | Trimethylolpropane/m-Xylylene diisocyanate=1/3 adduct | 1/4 | 30,,200 |

[Synthesis examples of polymer fine particle]

(Synthesis of Polymer fine particle CP-1)

An oil phase component was prepared by dissolving 8 g of the solution of Polyvalent isocyanate adduct NCO-1 described above, 2 g of adduct obtained by addition of trimethylolpropane (6 mol) and xylene diisocyanate (18 mol) and further addition of methyl- terminated polyoxyethylene (1 mol) (number of oxyethylene repeating unit: 90) thereto (produced by Mitsui Chemicals, Inc., 50% by weight ethyl acetate solution), 3.15 g of pentaerythritol triacrylate (SR444, produced by Nippon Kayaku Co., Ltd.) and 0.1 g of PIONIN A- 41C (produced by Takemoto Oil & Fat Co., Ltd.) in 17 g of ethyl acetate. As an aqueous phase component, 40 g of a 4% by weight aqueous solution of polyvinyl alcohol (PVA-205, produced by Kuraray Co., Ltd.) was prepared. The oil phase component and the aqueous phase component were mixed and emulsified using a homogenizer at 12, 000 rpm for 10 minutes. The resulting emulsion was added to a mixed aqueous solution composed of 25 g of distilled water and 0.2 g of U- CAT SA102 (1, 8- diazabicyclo [5.4.0] undeca- 7-ene octoate, produced by SAN- APRO Ltd.) and the mixture was stirred at room temperature for 30 minutes and then allowed to stand at 45°C for 24 hours. The microgel liquid thus- obtained was diluted using distilled water so as to have the solid content concentration of 15% by weight to prepare microgel (Polymer fine particle CP- 1) . The average particle size of the polymer fine particle was measured by a light scattering method and found to be 0.26 $\mu$m.

(Synthesis of Polymer fine particles CP-2 to CP-21)

Polymer fine particles CP-2 to CP-21 were obtained in the same manner as described in Synthesis of Polymer fine particle CP-1 except for changing the solution of Polyvalent isocyanate adduct NCO-1 to the solutions of Polyvalent isocyanate adducts NCO-2 to NCO-21 shown in Tables 1 and 2, respectively.

(Synthesis of Polymer fine particles CP-22 to CP-25)

Polymer fine particles CP-22 to CP-25 were obtained in the same manner as described in Synthesis of Polymer fine particle CP-1 except for changing the solution of Polyvalent isocyanate adduct NCO-1 to the 50% by weight ethyl acetate solutions of Polyvalent isocyanate adduct NCO-22 to NCO25 shown in Table 3 below, respectively.

TABLE 3

| Polymer Fine Particle | Polyvalent Isocyanate Adduct | | |
|---|---|---|---|
| | Code | Composition | Mw of Dibutylamine Adduct |
| CP-22 | NCO-22 | Trimethylolprompane/m-Xylylene diisocyanate = 1/3 adduct | 22,000 |
| CP-23 | NCO-23 | Trimethlylolpropane/Isophorone diisocyanate =1/3 adduct | 18,200 |

(continued)

| Polymer Fine Particle | Polyvalent Isocyanate Adduct | | |
|---|---|---|---|
| | Code | Composition | Mw of Dibutylamine Adduct |
| CP-24 | NCO-24 | 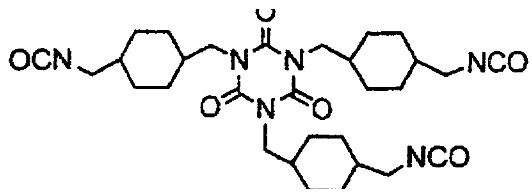 | 1,000 |
| CP-25 | NCO-25 | 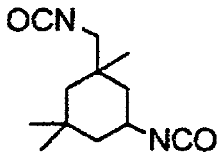 | 500 |

Examples 1 to 18

Lithographic printing plate precursor for alkali development processing

1. Preparation of Support (1)

An aluminum plate (material: JIS A 1050) having a thickness of 0.3 mm was subjected to a degreasing treatment at 50°C for 30 seconds using a 10% by weight aqueous sodium aluminate solution in order to remove rolling oil on the surface thereof and then grained the surface thereof using three nylon brushes embedded with bundles of nylon bristle having a diameter of 0.3 mm and an aqueous suspension (specific gravity: 1.1 g/cm$^3$) of pumice having a median size of 25 μm, followed by thorough washing with water. The plate was subjected to etching by immersing in a 25% by weight aqueous sodium hydroxide solution of 45°C for 9 seconds, washed with water, then immersed in a 20% by weight aqueous nitric acid solution at 60°C for 20 seconds, and washed with water. The etching amount of the grained surface was about 3 g/m$^2$.

Then, using an alternating current of 60 Hz, an electrochemical roughening treatment was continuously carried out on the plate. The electrolytic solution used was a 1% by weight aqueous nitric acid solution (containing 0.5% by weight of aluminum ion) and the temperature of electrolytic solution was 50°C. The electrochemical roughening treatment was conducted using an alternating current source, which provides a rectangular alternating current having a trapezoidal waveform such that the time TP necessary for the current value to reach the peak from zero was 0.8 msec and the duty ratio was 1: 1, and using a carbon electrode as a counter electrode. A ferrite was used as an auxiliary anode. The current density was 30 A/dm$^2$ in terms of the peak value of the electric current and 5% of the electric current flowing from the electric source was divided to the auxiliary anode. The quantity of electricity in the nitric acid electrolysis was 175 C/dm$^2$ in terms of the quantity of electricity when the aluminum plate functioned as an anode. The plate was then washed with water by spraying.

The plate was then subjected to an electrochemical roughening treatment in the same manner as in the nitric acid electrolysis above using as an electrolytic solution, a 0.5% by weight aqueous hydrochloric acid solution (containing 0.5% by weight of aluminum ion) having temperature of 50°C and under the condition that the quantity of electricity was 50 C/dm$^2$ in terms of the quantity of electricity when the aluminum plate functioned as an anode. The plate was then washed with water by spraying.

The plate was then subjected to an anodizing treatment using as an electrolytic solution, a 15% by weight aqueous sulfuric acid solution (containing 0.5% by weight of aluminum ion) at a current density of 15 A/dm$^2$ to form a direct current anodized film of 2.5 g/m$^2$, washed with water and dried to prepare Support (1). The center line average roughness (Ra) of the support was measured using a stylus having a diameter of 2 μm and found to be 0.51 μm.

2. Coating of undercoat layer

Coating solution for undercoat layer shown below was coated on Support (1) described above and dried at 100°C for 10 seconds. The coating amount was 10 mg/m$^2$.

<Coating solution for undercoat layer>

| | |
|---|---|
| Polymer compound A having structure shown below | 0.05 g |
| Methanol | 27 g |
| Ion-exchanged water | 3 g |

Polymer compound A

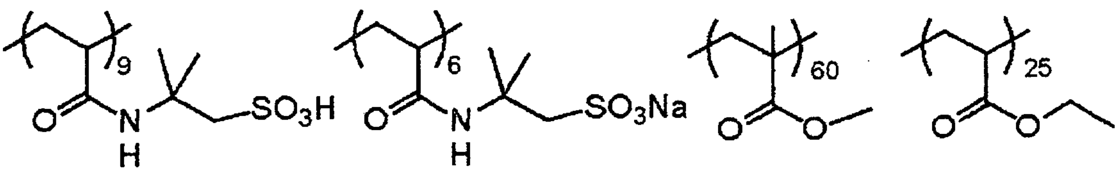

Mw: 40,000

3. Coating of image-recording layer

Coating solution (1) for image-recording layer having the composition shown below was prepared, coated on the undercoat layer using a wire bar so as to have a coating amount after drying of 0.9 g/$m^2$, and dried by a hot air drying device at 115°C for 34 seconds to form an image-recording layer.

<Coating solution (1) for image-recording layer>

| | |
|---|---|
| Polymer fine particle shown in Table 4 | 4.568 g |
| Infrared absorbing dye (IR dye) shown in Table 4 | 0.038 g |
| Radical polymerization initiator A (S-1 having structure shown below) | 0.061 g |
| Radical polymerization initiator B (I-1 having structure shown below) | 0.094 g |
| Mercapto compound (SH-1 having structure shown below) | 0.015 g |
| Sensitizing auxiliary (T-1 having structure shown below) | 0.081 g |
| Addition polymerizable compound (M-1 having structure shown below) | 0.428 g |
| Binder Polymer A (B-1 having structure shown below) | 0.311 g |
| Binder Polymer B (B-2 having structure shown below) | 0.250 g |
| Binder Polymer C (B-3 having structure shown below) | 0.062 g |
| Polymerization inhibitor (Q-1 having structure shown below) | 0.0012 g |

(continued)

| | |
|---|---|
| Dispersion of copper phthalocyanine pigment (having composition shown below) | 0.159g |
| Fluorine-based surfactant (MEGAFAC F-780-F, produced by DIC Corp., 30% by weight methyl isobutyl ketone (MIBK) solution) | 0.0081 g |
| Methyl ethyl ketone | 5.886 g |
| Methanol | 2.733 g |
| 1-Methoxy-2-propanol | 5.886 g |

IR-1

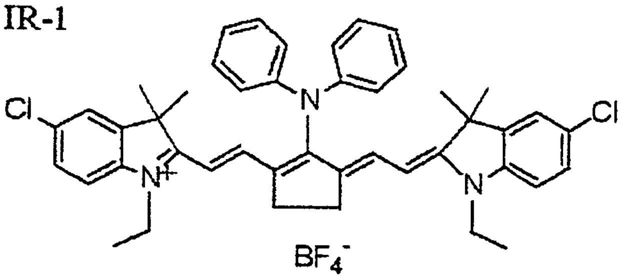

IR-2

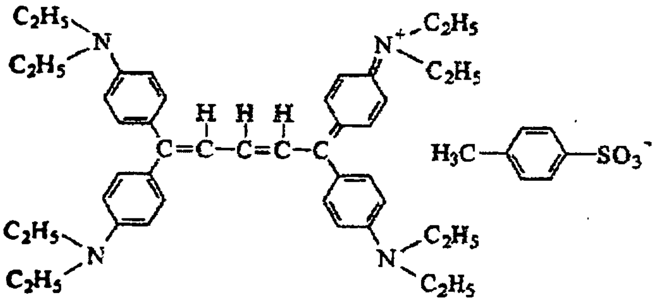

IR-3

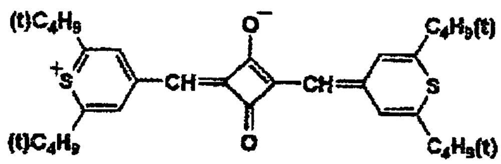

S-1

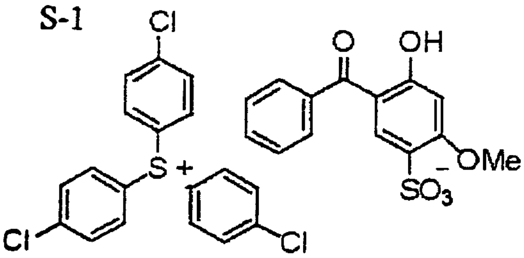

I-1

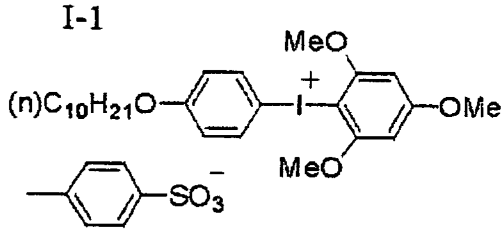

SH-1

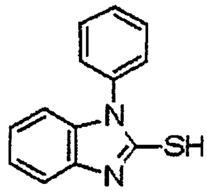

Q-1

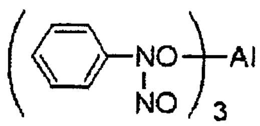

T-1

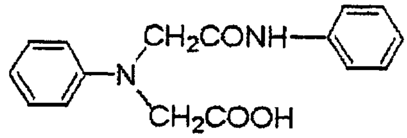

M-1

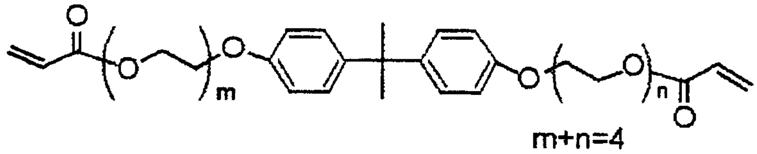

m+n=4

B-1

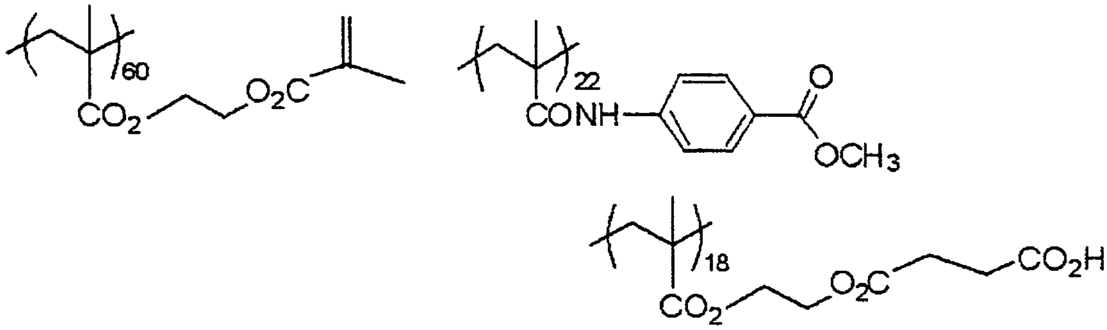

Mw: 100,000

B-2

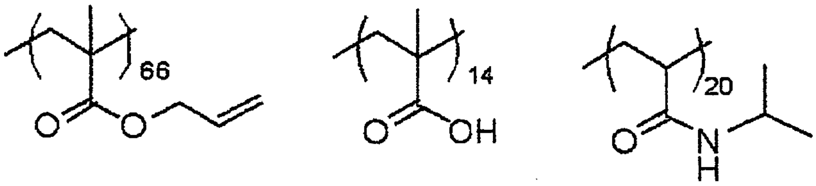

Mw: 100,000

B-3

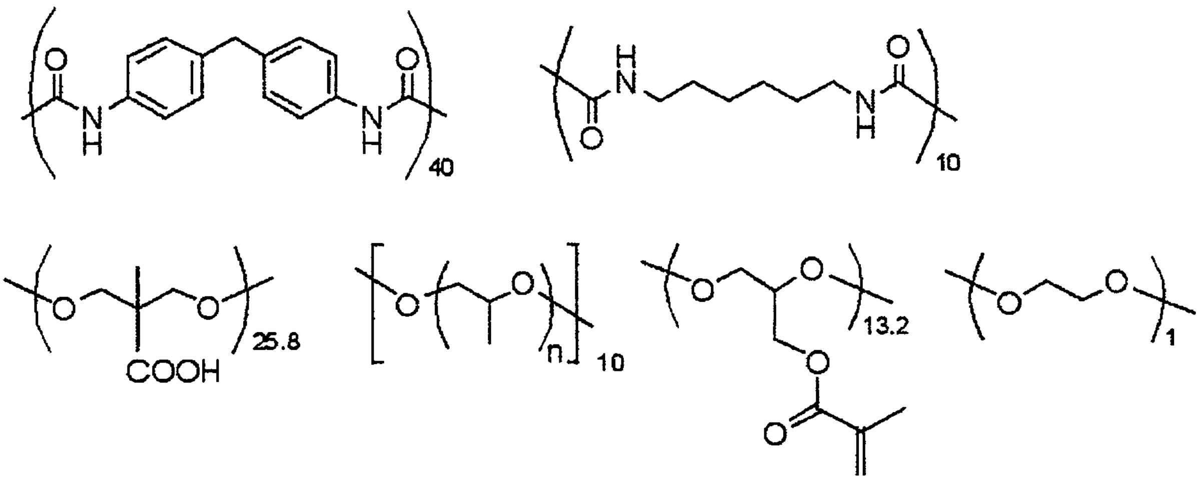

Mw: 100,000

<Composition of Dispersion of copper phthalocyanine pigtnent>

Copper phthalocyanine pigment: 15 parts by weight; dispersing agent (allyl methacrylate/ methacrylic acid (80/20) copolymer) : 10 parts by weight; solvent (cyclohexanone/ methoxypropyl acetate/ 1- methoxy- 2- propanol =15 parts by weight/ 20 parts by weight/ 40 parts by weight)

4. Coating of protective layer

<Lower protective layer>

A mixed aqueous solution (coating solution for protective layer) composed of synthetic mica (SOMASIF MEB-3L, 3.2% aqueous dispersion, produced by CO-OP Chemical Co., Ltd.), polyvinyl alcohol (GOSERAN CKS-50, saponification degree: 99% by mole, polymerization degree: 300, sulfonic acid-modified polyvinyl alcohol, produced by Nippon Synthetic Chemical Industry Co., Ltd.), Surfactant A (EMALEX 710, produced by Nihon Emulsion Co., Ltd.) and Surfactant B (ADEKA PLURONIC P-84, produced by ADEKA Corp.) was coated on the surface of the image-recording layer by a wire bar and dried by a hot air drying device at 125°C for 30 seconds.
The content ratio of synthetic mica (solid content)/polyvinyl alcohol/Surfactant A/Surfactant B in the mixed aqueous solution (coating solution for protective layer) was 7.5/89/2/1.5 (in % by weight) and the coating amount (coverage after drying) was 0.5 g/$m^2$.

<Upper protective layer>

A mixed aqueous solution (coating solution for protective layer) composed of organic filler (ARTPEARL J-7P, produced by Negami Chemical Industrial Co., Ltd.), synthetic mica (SOMASIF MEB-3L, 3.2% aqueous dispersion, produced by CO-OP Chemical Co., Ltd.), polyvinyl alcohol (L-3266, saponification degree: 87% by mole, polymerization degree: 300, sulfonic acid-modified polyvinyl alcohol, produced by Nippon Synthetic Chemical Industry Co., Ltd.), thickener (CELLOGEN FS-B, produced by Dai-ichi Kogyo Seiyaku Co., Ltd.), Polymer compound A described above and surfactant (EMALEX 710, produced by Nihon Emulsion Co., Ltd.) was coated on the surface of the lower protective layer by a wire bar and dried by a hot air drying device at 125°C for 30 seconds.
The content ratio of organic filler/synthetic mica (solid content)/polyvinyl alcohol/thickener/Polymer compound A/surfactant in the mixed aqueous solution (coating solution for protective layer) was 4.7/2.8/67.4/18.6/2.3/4.2 (in % by weight) and the coating amount (coverage after drying) was 1.8 g/$m^2$.
Thus, the lithographic printing plate precursors for Examples 1 to 18 were obtained, respectively.

Comparative Examples 1 to 10

The lithographic printing plate precursors for Comparative Examples 1 to 10 were obtained in the same manner as in Example 1 except for changing the polymer fine particle and infrared absorbing dye used in Example 1 to those

shown in Table 4 below, respectively.

[Evaluation of lithographic printing plate precursor]

(1) Evaluation of sensitivity

The lithographic printing plate precursor obtained was exposed by Trendsetter 3244VX (produced by Creo Co.) equipped with a water-cooled 40 W infrared semiconductor laser at resolution of 175 lpi and a rotational number of an external drum of 150 rpm while changing output in a range from 0 to 8 W by 0.15 in log E. The exposure was conducted under conditions or 25°C and 50% RH. After the exposure, the exposed lithographic printing plate precursor was subjected to development processing using a development processor (LP-1310 News, produced by FUJ1FILM Corp.) at 30°C for 12 seconds. The developer used was a solution prepared by diluting DH-N (produced by FUJIFILM Corp.) with water in a ratio of 1:4. The finisher used was a solution prepared by diluting GN-2K (produced by FUJIFILM Corp.) with water in a ratio of 1:1.

The density of the image area of the lithographic printing plate prepared after the development processing was measured using a Macbeth reflection densitomer RD-918 and a red filter attached to the densitomer to determine the cyan density. A reciprocal number of the exposure amount necessary for attaining the cyan density of 0.8 was used as an index of the sensitivity. The sensitivity of the lithographic printing plate precursor was relatively evaluated taking the sensitivity of the lithographic printing plate precursor of Comparative Example 1 as 100. A larger value indicates higher sensitivity. The results obtained are shown in Table 4.

(2) Evaluations of printing durability and printing stain

The lithographic printing plate precursor obtained was exposed by Trendsetter 3244VX (produced by Creo Co.) equipped with a water-cooled 40 W infrared semiconductor laser with 80% halftone dot image of resolution of 175 lpi at a rotational number of an external drum of 206 rpm and in a plate surface energy of 100 $mJ/cm^2$. After the exposure, the protective layer was removed by washing with tap water and then subjected to development processing in the same manner as in (1) Evaluation of sensitivity. The resulting lithographic printing plate was subjected to printing using a printing machine (Lithrone, produced by Komori Corp.) to observe the image area of printed material and a number of sheets when the image initiated to become faint was used as an index of the printing durability. The printing stain was evaluated by visual observation of ink stain in the non-image area after printing 1,000 sheets. The results obtained are shown in Table 4.

(3) Evaluation of preserving property

Using the lithographic printing plate precursor subjected to forced preservation at 60°C and 75% RH for 4 days, a lithographic printing plat was prepared in the same manner as described above and the printing was conducted in the same manner as described above to evaluate the printing stain.

TABLE 4

| | Polymer Fine Particle | Infrared Absorbing Dye | Sensitivity | Printing Durability (sheets) | Printing Stain | |
|---|---|---|---|---|---|---|
| | | | | | Without Forced Preservation | With Forced Preservation at 60°C and 75% RH for 4 Days |
| Example 1 | CP-1 | IR-1 Cyanine dye | 120 | 130,000 | No stain | No stain |
| Example 2 | CP-2 | | 110 | 130,000 | No stain | No stain |
| Example 3 | CP-3 | | 110 | 130,000 | No stain | No stain |
| Example 4 | CP-4 | | 110 | 130,000 | No stain | No stain |
| Example 5 | CP-5 | | 110 | 150,000 | No stain | No stain |
| Example 6 | CP-6 | | 110 | 140,000 | No stain | No stain |
| Example 7 | CP-7 | | 110 | 130,000 | No stain | No stain |
| Example 8 | CP-8 | | 110 | 140,000 | No stain | No stain |
| Example 9 | CP-9 | | 110 | 130,000 | No stain | No stain |
| Example 10 | CP-10 | | 110 | 130,000 | No stain | No stain |
| Example 11 | CP-11 | | 110 | 150,000 | No stain | No stain |
| Example 12 | CP-12 | | 110 | 150,000 | No stain | No stain |
| Example 13 | CP-13 | | 110 | 120,000 | No stain | No stain |
| Example 14 | CP-14 | | 110 | 120,000 | No stain | No stain |
| Example 15 | CP-15 | | 110 | 110,000 | No stain | No stain |
| Example 16 | CP-16 | | 110 | 110,000 | No stain | No stain |
| Example 17 | CP-1 | IR-2 Diimmonium salt | 100 | 110,000 | No stain | No stain |
| Example 18 | CP-1 | IR-3 Squarylium salt | 100 | 110,000 | No stain | No stain |

(continued)

| | Polymer Fine Particle | Infrared Absorbing Dye | Sensitivity | Printing Durability (sheets) | Printing Stain | |
|---|---|---|---|---|---|---|
| | | | | | Without Forced Preservation | With Forced Preservation at 60°C and 75% RH for 4 Days |
| Comparative Example 1 | - | IR-1 Cyanine dye | 100 | Not more than 10,000 | No stain | Stain |
| Comparative Example 2 | CP-17 | | 110 | 80,000 | | |
| Comparative Example 3 | CP-18 | | 110 | 80,000 | No stain | No stain |
| Comparative Example 4 | CP-19 | | 110 | 80,000 | No stain | No stain |
| Comparative Example 5 | CP-20 | | 110 | 80,000 | No stain | No stain |
| Comparative Example 6 | CP-21 | | 110 | 80,000 | No stain | No stain |
| Comparative Example 7 | CP-22 | | 110 | 60,000 | No stain | No stain |
| Comparative Example 8 | CP-23 | | 110 | 70,000 | No stain | No stain |
| Comparative Example 9 | CP-24 | | 110 | 70,000 | No stain | No stain |
| Comparative Example 10 | CP-25 | | 110 | 80,000 | No stain | No stain |

As is apparent from the results shown in Table 4, the lithographic printing plate precursors (Examples 1 to 18) containing the polymer fine particle according to the invention exhibit the improvements in both the stain resistance and printing durability in comparison with the lithographic printing plate precursors which do not contain the polymer fine particle according to the invention.

Examples 19 to 36

Lithographic printing plate precursor of on-press development type

(1) Preparation of Support (2)

In order to ensure the hydrophilicity of the non-image area, Support (1) described above was subjected to silicate treatment using a 2.5% by weight aqueous sodium silicate No. 3 solution at 60°C for 10 seconds and subsequently washed with water to obtain Support (2). The adhesion amount of Si was 10 mg/m$^2$.

(2) Formation of undercoat layer

Coating solution (1) for undercoat layer shown below was coated on Support (2) described above so as to have a dry coating amount of 20 mg/m$^2$ to prepare a support having an undercoat layer.

<Coafiing solution (1) for undercoat layer>

| | |
|---|---|
| Compound (1) for undercoat layer having structure shown below | 0.18 g |

(continued)

| | |
|---|---|
| Hydroxyethyliminodiacetic acid | 0.10 g |
| Methanol | 55.24 g |
| Water | 6.15 g |

Compound (1) for undercoat layer

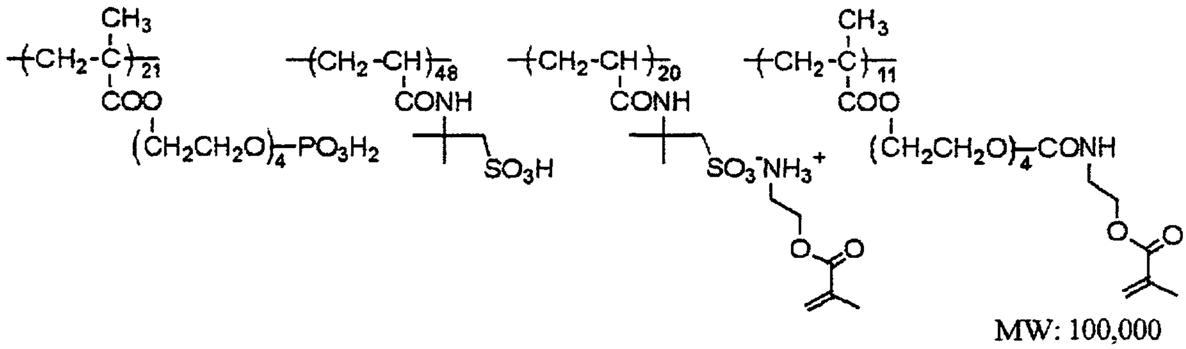

MW: 100,000

(3) Formation of image-recording layer

Coating solution (2) for image-recording layer having the composition shown below was coated on the undercoat layer formed as described above by a bar and dried in an oven at 1O0°C for 60 seconds to form an image-recording layer having a dry coating amount of 1.0 g/$m^2$.

Coating solution (2) for image-recording layer was prepared by mixing Photosensitive solution (1) shown below with Polymer fine particle solution (1) shown below just before the coating, followed by stirring.

<Photosensitive solution (1)>

| | |
|---|---|
| Binder polymer (1) having structure shown below | 0.240g |
| Infrared absorbing dye shown in Table 5 | 0.030g |
| Radical polymerization initiator (1) having structure shown below | 0.162 g |
| Radical polymerizable compound (Tris(acryloyloxyethyl) isocyanurate (NK ESTER A-9300, produced by Shin-Nakamura Chemical Co., Ltd.)) | 0.192g |
| Hydrophilic low molecular weight compound (Tris(2-hydroxyethyl) isocyanurate) | 0.062g |
| Hydrophilic low molecular weight compound (1) having structure shown below | 0.050 g |
| Oil-sensitizing agent (Phosphonium compound (1) having structure shown below) | 0.055g |
| Oil-sensitizing agent (Benzyl dimethyl octyl ammonium $PF_6$ salt) | 0.018g |

(continued)

| | |
|---|---|
| Oil-sensitizing agent (Ammonium group-containing polymer having structure shown below (reduced specific viscosity: 44 ml/g) | 0.035 g |
| Fluorine-based surfactant (1) having structure shown below | 0.008 g |
| 2-Butanone | 1.091 g |
| 1-Methoxy-2-propanol | 8.609 g |

<Polymer fine particle solution (1)>

| | |
|---|---|
| Polymer fine particle shown in Table 5 | 2.640 g |
| Distilled water | 2.425 g |

The structures of Binder polymer (1), Radical polymerization initiator (1), Phosphonium compound (1), Hydrophilic low molecular weight compound (1), Oil-sensitizing agent (ammonium group-containing polymer) and Fluorine-based surfactant (1) are shown below.

Binder polymer (1)

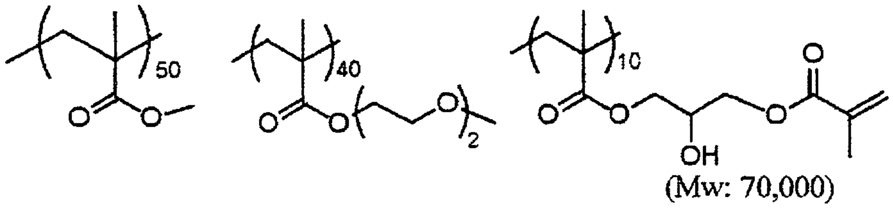

Ammonium group-containing polymer

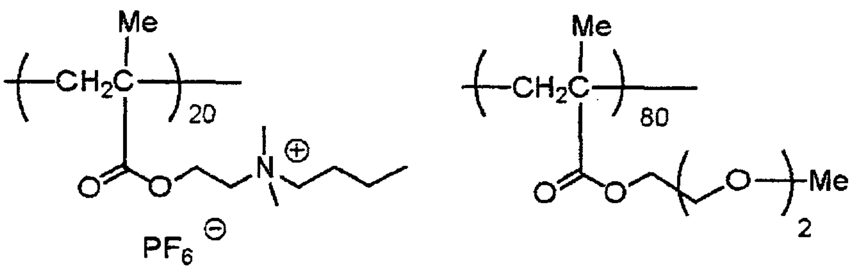

Radical polymerization initiator (1)

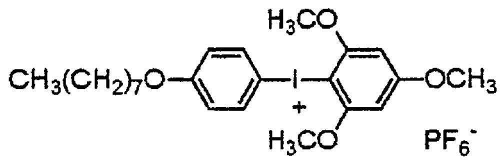

Fluorine-based surfactant (1)

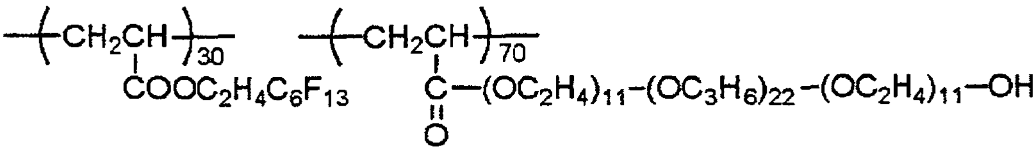

(Mw: 13,000)

Hydrophilic low molecular weight compound (1)

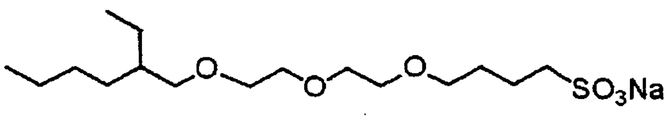

Phosphonium compound (1)

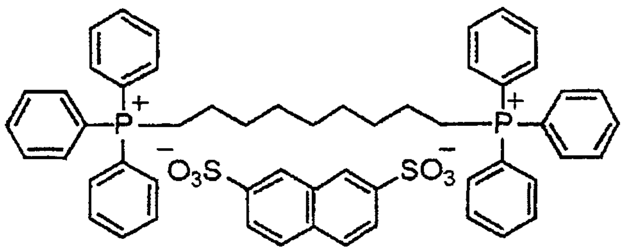

(4) Formation of Protective layer

Coating solution (1) for protective layer having the composition shown below was coated on the image-recording layer described above by a bar and dried in an oven at 120°C for 60 seconds to form a protective layer having a dry coating amount of 0.15 g/$m^2$, thereby preparing lithographic printing plate precursors for Examples 19 to 36, respectively.

<Coating solution (1) for protective layer>

| | |
|---|---|
| Dispersion of inorganic stratiform compound (1) shown below | 1.5 g |

(continued)

| | |
|---|---|
| Aqueous 6% by weight solution of polyvinyl alcohol (CKS 50, sulfonic acid-modified polyvinyl alcohol, saponification degree: 99% by mole or more, polymerization degree: 300, produced by Nippon Synthetic Chemical Industry Co., Ltd.) | 0.55 g |
| Aqueous 6% by weight solution of polyvinyl alcohol (PVA-405, saponification degree: 81.5 % by mole, polymerization degree: 500, produced by Kuraray Co., Ltd.) | 0.03 g |
| Aqueous 1% by weight solution of surfactant (EMALEX 710, produced by Nihon Emulsion Co., Ltd.) | 0.86 g |
| Ion-exchanged water | 6.0 g |

<Preparation of Dispersion of inorganic stratiform compound (1)>

To 193.6 g of ion-exchanged water was added 6.4 g of synthetic mica (SOMASIF ME-100, produced by CO-OP Chemical Co., Ltd.) and the mixture was dispersed using a homogenizer until an average particle size (according to a laser scattering method) became 3 μm to prepare Dispersion of inorganic stratiform compound (1). The aspect ratio of the inorganic particle thus-dispersed was 100 or more.

<u>Comparative Examples 11 to 20</u>

Lithographic printing plate precursors for Comparative Examples 11 to 20 were prepared in the same manner as in Example 19 except for changing the polymer fine particle in Example 19 to those shown in Table 5 below, respectively.

[Evaluation of lithographic printing plate precursor]

(1) On-press development property

Each of the lithographic printing plate precursors thus-obtained was exposed by Luxel Platesetter T-6000III equipped with an infrared semiconductor laser, produced by FUJIFILM Corp. under the conditions of a rotational number of an external drum of 1,000 rpm, laser output of 70% and resolution of 2,400 dpi. The exposed image contained a fine line chart.

The exposed lithographic printing plate precursor was mounted without undergoing development processing on a plate cylinder of a printing machine (LITHRONE 26, produced by Komori Corp.). Using dampening water (ECOLITY-2 (produced by FUJIFILM Corp.)/tap water = 2/98 (volume ratio)) and VALUES-G (N) Black Ink (produced by Dainippon Ink & Chemicals, Inc.), the dampening water and ink were supplied according to the standard automatic printing start method of LITHRONE 26 to conduct printing on 100 sheets of Tokubishi art paper (76.5 kg) at a printing speed of 10,000 sheets per hour.

A number of the printing papers required until the on-press development of the unexposed area of the image-recording layer on the printing machine was completed to reach a state where the ink was not transferred to the printing paper in the non-image area was measured to evaluate the on-press development property. The results obtained are shown in Table 5.

(2) Fine line reproducibility

Ordinarily, in a negative lithographic printing plate precursor, when an exposure amount is small, a curing degree of the image- recording layer (photosensitive layer) becomes low, while when the exposure amount is large, the curing degree of the image- recording layer becomes high. In the case where the curing degree of the image- recording layer is too low, printing durability of the lithographic printing plate obtained decreases and reproducibility of small point and fine line is deteriorated. On the contrary, when the curing degree of the image- recording layer is high, the printing durability increases and the reproducibility of small point and fine line is improved.

In the examples, the lithographic printing plate precursors obtained above were evaluated with the printing durability and fine line reproducibility under the same exposure conditions as described above and they are used as indexes of sensitivity of the lithographic printing plate precursor. Specifically, it can be said that as a number of printing sheet is large in the printing durability or as a width of fine line in the fine line reproducibility is small, the sensitivity of the lithographic printing plate precursor is high.

Specifically, after the confirmation that printed materials without ink stain in the non- image area were obtained by the printing of 100 sheets as described above, 500 sheets were successively printed. The fine line chart (a chart including fine lines of 10, 12, 14, 16, 18, 20, 25, 30, 35, 40, 60, 80, 100 and 200 μm in width) on the $600^{th}$ printed material was observed by a 25- power magnifier and the fine line reproducibility was evaluated from the width of fine line reproduced by ink without interruption according to the criteria shown below.

A: A level where a fine line of 10 μm in width can be reproduced.
B: A level where a fine line of 16 μm in width can be reproduced.

The results obtained are shown in Table 5.

(3) Stain resistance (preservation stability)

The lithographic printing plate precursor which had been subjected to forced preservation at temperature of 45°C and humidity of 75% for 3 days was exposed and developed under the same conditions in the evaluation of on-press development property described above, and after printing 100 sheets, stain in the non-image area of the printed material was visually observed. The stain was compared with that in case of the lithographic printing plate precursor which had not been subjected to the forced preservation to evaluate the preservation stability. The results obtained are shown in Table 5.

(4) Printing durability

After performing the evaluation for the on-press development property described above, the printing was continued. As the increase in a number of printing papers, the image-recording layer was gradually abraded to cause decrease in the ink density on the printed material. A number of printing papers wherein a value obtained by measuring a halftone dot area rate of the 50% halftone dot of FM screen on the printed material using a Gretag densitometer decreased by 5% from the value measured on the $100^{th}$ paper of the printing was determined to evaluate the printing durability. The results obtained are shown in Table 5.

TABLE 5

| | Polymer Fine Particle | Infrared Absorbing Dye | On-press Development Property (sheets) | Fine Line Reproducibility | Printing Durability (sheets) | Stain Resistance | |
|---|---|---|---|---|---|---|---|
| | | | | | | Without Forced Preservation | With Forced Preservation at 45°C and 75% RH for 3 Days |
| Example 19 | CP-1 | IR-1 Cyanine dye | 17 | A | 93,000 | No stain | No stain |
| Example 20 | CP-2 | | 16 | A | 92,000 | No stain | No stain |
| Example 21 | CP-3 | | 17 | A | 91,000 | No stain | No stain |
| Example 22 | CP-4 | | 16 | A | 92,000 | No stain | No stain |
| Example 23 | CP-5 | | 17 | A | 105,000 | No stain | No stain |
| Example 24 | CP-6 | | 17 | A | 92,000 | No stain | No stain |
| Example 25 | CP-7 | | 17 | A | 89,000 | No stain | No stain |
| Example 26 | CP-8 | | 17 | A | 92,000 | No stain | No stain |
| Example 27 | CP-9 | | 17 | A | 89,000 | No stain | No stain |
| Example 28 | CP-10 | | 17 | A | 89,000 | No stain | No stain |
| Example 29 | CP-11 | | 17 | A | 105,000 | No stain | No stain |
| Example 30 | CP-12 | | 17 | A | 105,000 | No stain | No stain |
| Example 31 | CP-13 | | 18 | A | 83,000 | No stain | No stain |
| Example 32 | CP-14 | | 15 | A | 81,000 | No stain | No stain |
| Example 33 | CP-15 | | 15 | B | 78,000 | No stain | No stain |
| Example 34 | CP-16 | | 15 | B | 74,000 | No stain | No stain |
| Example 35 | CP-1 | IR-2 Diimmonium salt | 17 | B | 71,000 | No stain | No stain |
| Example 36 | CP-1 | IR-3 Squarylium salt | 17 | B | 71,000 | No stain | No stain |

(continued)

| | Polymer Fine Particle | Infrared Absorbing Dye | On-press Development Property (sheets) | Fine Line Reproducibility | Printing Durability (sheets) | Stain Resistance | |
|---|---|---|---|---|---|---|---|
| | | | | | | Without Forced Preservation | With Forced Preservation at 45°C and 75% RH for 3 Days |
| Comparative Example 11 | - | IR-1 Cyanine dye | 60 | B | 15,000 | No stain | Stain |
| Comparative Example 12 | CP-17 | | 15 | B | 63,000 | No stain | No stain |
| Comparative Example 13 | CP-18 | | 15 | B | 67,000 | No stain | No stain |
| Comparative Example 14 | CP-19 | | 17 | B | 67,000 | No stain | No stain |
| Comparative Example 15 | CP-20 | | 17 | B | 61,000 | No stain | No stain |
| Comparative Example 16 | CP-21 | | 17 | B | 60,000 | No stain | No stain |
| Comparative Example 17 | CP-22 | | 17 | B | 42,000 | No stain | No stain |
| Comparative Example 18 | CP-23 | | 17 | B | 55,000 | No stain | No stain |
| Comparative Example 19 | CP-24 | | 20 | B | 56,000 | No stain | No stain |
| Comparative Example 20 | CP-25 | | 30 | B | 58,000 | No stain | No stain |

As is apparent from the results shown in Table 5, the lithographic printing plate precursors (Examples 19 to 36) containing the polymer fine particle according to the invention exhibit the improvements in both the printing durability and stain resistance (preservation stability) in comparison with the lithographic printing plate precursors which do not contain the polymer line particle according to the invention. In addition, the on-press development property and fine line reproducibility can be maintained at the good level.

## Claims

1. A lithographic printing plate precursor comprising a hydrophilic support and an image-recording layer containing (A) a polymer fine particle, (B) a radical polymerizable compound and (C) an infrared absorbing dye, wherein the polymer fine particle is a polymer fine particle obtained by a reaction between a polyvalent isocyanate compound which is an adduct of a polyhydric phenol compound having two or more hydroxyl groups in a molecule thereof and isophorone diisocyanate and a compound having an active hydrogen atom.

2. The lithographic printing plate precursor as claimed in Claim 1, wherein the polyhydric phenol compound is a polyhydric phenol compound having three or more hydroxyl groups in a molecule thereof

3. The lithographic printing plate precursor as claimed in Claim 1 or 2, wherein the polyhydric phenol compound is a polyhydric phenol compound having three or more hydroxyl groups in a molecule thereof represented by the following formula (1) or (2):

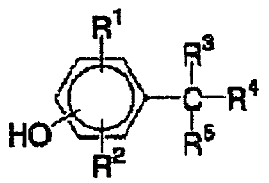

(1)

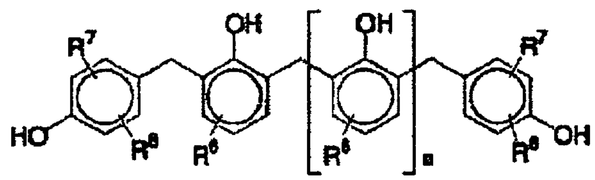

(2)

wherein,
in the formula (1), $R^1$ and $R^2$ each independently represents a hydrogen atom, a methyl group or a cyclohexyl group, $R^3$ represents a hydrogen atom, a methyl group or a group represented by the following formula (a),
in the formula (a), $R^1$ and $R^2$ each independently represents a hydrogen atom, a methyl group or a cyclohexyl group, n represents an integer from 0 to 2, and $R^9$ represents a hydrogen atom, a methyl group or a cyclohexyl group;

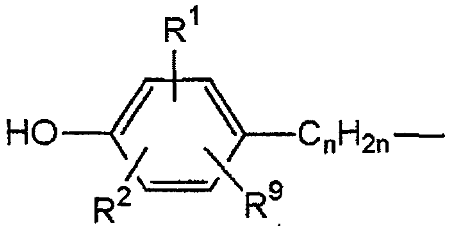

(a)

in the formula (1), $R^4$ represents a methyl group or a group represented by the formula (a), $R^5$ represents a hydrogen atom or a group selected from the following Group A, in the formulae of the Group A, $R^1$ and $R^2$ each independently represents a hydrogen atom, a methyl group or a cyclohexyl group:

Group A

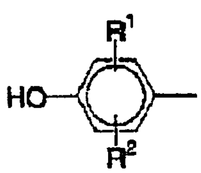

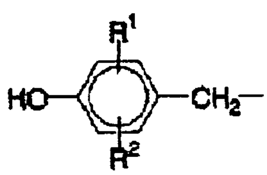

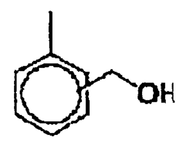

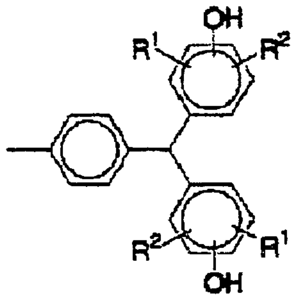

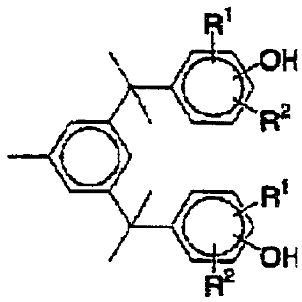

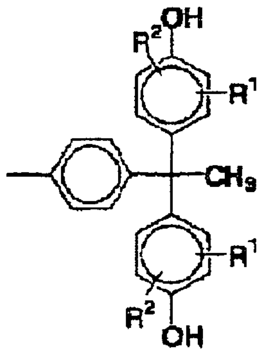

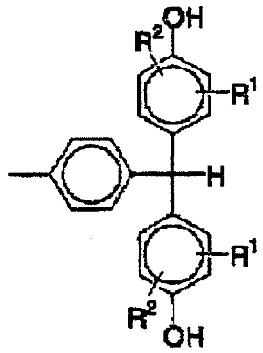

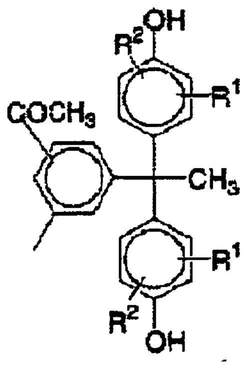

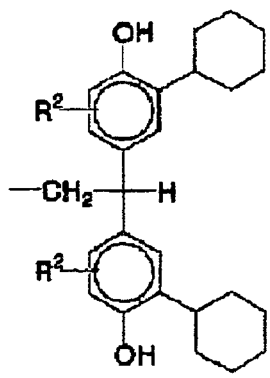

in the formula (2), $R^6$ represents a hydrogen atom, a methyl group a phenyl group or a cyclohexyl group, $R^7$ and $R^8$ each independently represents a hydrogen atom, a methyl group or a cyclohexyl group, and m represents 0 or 1.

4. The lithographic printing plate precursor as claimed in any one of Claims 1 to 3, wherein the polyvalent isocyanate compound is an adduct of isophorone diisocyanate and a compound represented by the following formula:

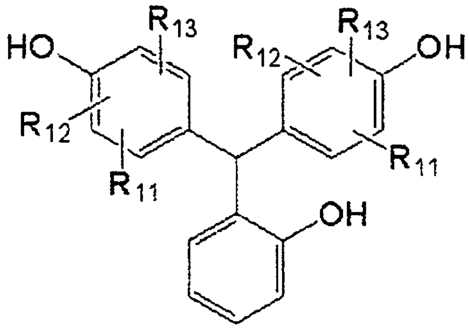

(4)

wherein, in the formula (4), $R_{11}$, $R_{12}$ and $R_{13}$ each independently represents a hydrogen atom, a methyl group or a cyclohexyl group.

**5.** The lithographic printing plate precursor as claimed in Claim 4, wherein a molar ratio of the isophorone diisocyanate and the compound represented by formula (4) is from 3 : 1 to 6: 1.

**6.** The lithographic printing plate precursor as claimed in any one of Claims 1 to 5, wherein the polymer fine particle has a radical polymerizable group.

**7.** The lithographic printing plate precursor as claimed in any one of Claims 1 to 6, wherein the polymer fine particle has a polyoxyalkylene chain in a side chain thereof.

**8.** The lithographic printing plate precursor as claimed in any one of Claims 1 to 7, wherein the infrared absorbing dye is a cyanine dye represented by the following formula (3):

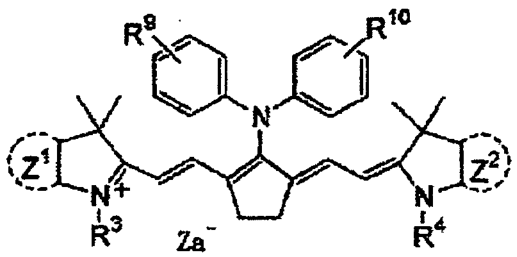

(3)

wherein, in the formula (3), $Z^1$ and $Z^2$ each independently represents an aromatic ring which may have a substituent or a heteroaromatic ring which may have a substituent, $R^3$ and $R^4$ each independently represents a hydrocarbon group having 20 or less carbon atoms which may have a substituent, $R^9$ and $R^{10}$ each independently represents a hydrogen atom or an alkoxy group which may have a substituent, and $Za^-$ represents a counter anion which is present when neutralization of charge is necessary.

**9.** The lithographic printing plate precursor as claimed in any one of Claims 1 to 8, which is a lithographic priming plate precursor of on-press development type, wherein an unexposed area of the image-recording layer is able to be removed with at least one of dampening water and priming ink.

**10.** A plate making method comprising:

exposing imagewise the lithographic printing plate precursor as claimed in Claim 9;
mounting the exposed lithographic printing plate precursor on a cylinder of a printing machine; and
removing an unexposed area of the image-recording layer with at least one of dampening water and printing ink.

## Patentansprüche

**1.** Vorläufer für eine lithografische Druckplatte, der einen hydrophilen Träger und eine Bildaufzeichnungsschicht umfasst, die (A) feine Polymerpartikel, (B) eine radikalisch polymerisierbare Verbindung und (C) einen Infrarot-absorbierenden Farbstoff enthält, wobei die feinen Polymerpartikel feine Polymerpartikel sind, die durch eine Reaktion zwischen einer polyvalenten Isocyanatverbindung, die ein Addukt einer mehrwertigen Phenolverbindung mit zwei oder mehr Hydroxylgruppen in einem Molekül davon und Isophorondiisocyanat ist, und einer Verbindung mit einem aktiven Wasserstoffatom erhalten wird.

**2.** Vorläufer für eine lithografische Druckplatte gemäß Anspruch 1, wobei die mehrwertige Phenolverbindung eine mehrwertige Phenolverbindung mit drei oder mehr Hydroxylgruppen in einem Molekül davon ist.

**3.** Vorläufer für eine lithografische Druckplatte gemäß Anspruch 1 oder 2, wobei die mehrwertige Phenolverbindung eine mehrwertige Phenolverbindung mit drei oder mehr Hydroxylgruppen in einem Molekül davon ist und durch die folgenden Formeln (1) oder (2) dargestellt ist:

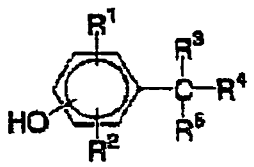

(1)

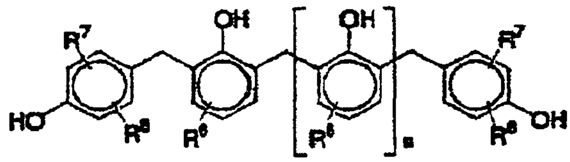

(2)

wobei in der Formel (1) $R^1$ und $R^2$ jeweils unabhängig ein Wasserstoffatom, eine Methylgruppe oder eine Cyclohexylgruppe darstellen, $R^3$ ein Wasserstoffatom, eine Methylgruppe oder eine Gruppe, die durch die folgende Formel (a) dargestellt ist, darstellt,
wobei in der Formel (a) $R^1$ und $R^2$ jeweils unabhängig ein Wasserstoffatom, eine Methylgruppe oder eine Cyclohexylgruppe darstellen, n eine ganze Zahl von 0 bis 2 darstellt und $R^9$ ein Wasserstoffatom, eine Methylgruppe oder eine Cyclohexylgruppe darstellt;

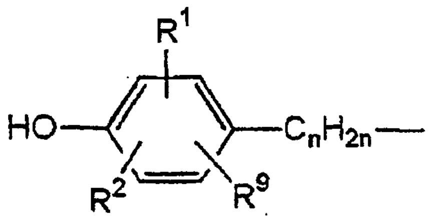

(a)

wobei in der Formel (1) $R^4$ eine Methylgruppe oder eine Gruppe, die durch die Formel (a) dargestellt ist, darstellt, $R^5$ ein Wasserstoffatom oder eine Gruppe, ausgewählt aus der folgenden Gruppe A darstellt, wobei in den Formeln der Gruppe A $R^1$ und $R^2$ jeweils unabhängig ein Wasserstoffatom, eine Methylgruppe oder eine Cyclohexylgruppe darstellen:

Gruppe A

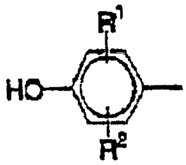

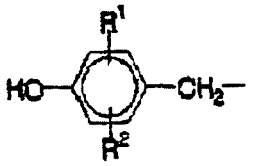

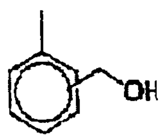

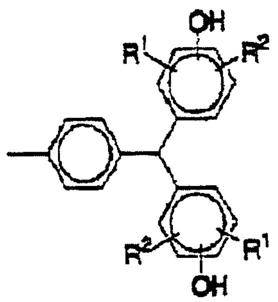

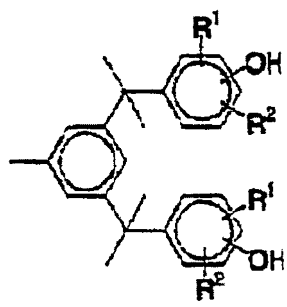

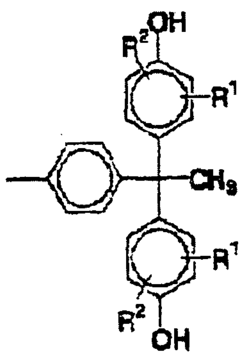

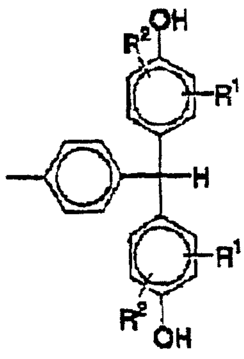

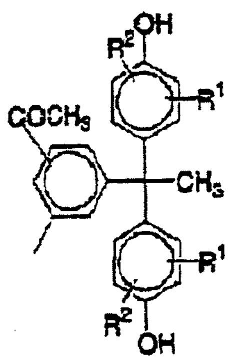

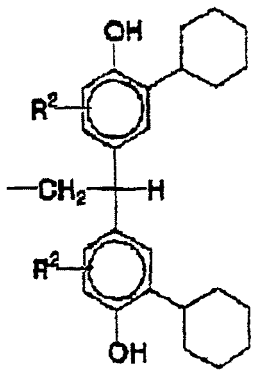

wobei in der Formel (2) $R^6$ ein Wasserstoffatom, eine Methylgruppe, eine Phenylgruppe oder eine Cyclohexylgruppe darstellt, $R^7$ und $R^8$ jeweils unabhängig ein Wasserstoffatom, eine Methylgruppe oder eine Cyclohexylgruppe darstellen und m 0 oder 1 darstellt.

**4.** Vorläufer für eine lithografische Druckplatte wie in jedem der Ansprüche 1 bis 3 beansprucht, wobei die polyvalente Isocyanatverbindung ein Addukt aus Isophorondiisocyanat und einer durch die folgende Formel dargestellten Verbindung ist:

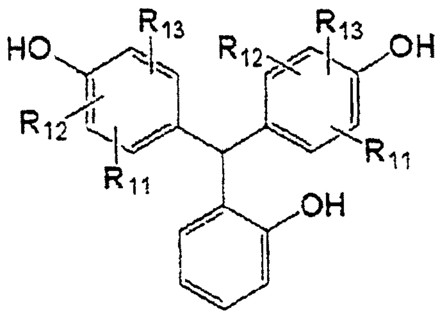

(4)

wobei in der Formel (4) $R_{11}$, $R_{12}$ und $R_{13}$ jeweils unabhängig ein Wasserstoffatom, eine Methylgruppe oder eine Cyclohexylgruppe darstellen.

**5.** Vorläufer für eine lithografische Druckplatte wie in Anspruch 4 beansprucht, wobei das Molverhältnis des Isophorondiisocyanats und der durch die Formel (4) dargestellten Verbindung 3:1 bis 6:1 beträgt.

**6.** Vorläufer für eine lithografische Druckplatte wie in jedem der Ansprüche 1 bis 5 beansprucht, wobei die feinen Polymerpartikel eine radikalisch polymerisierbare Gruppe haben.

**7.** Vorläufer für eine lithografische Druckplatte wie in jedem der Ansprüche 1 bis 6 beansprucht, wobei die feinen Polymerpartikel eine Polyoxyalkylenkette in einer Seitenkette haben.

8. Vorläufer für eine lithografische Druckplatte wie in jedem der Ansprüche 1 bis 7 beansprucht, wobei der Infrarot-absorbierende Farbstoff ein durch die folgende Formel (3) dargestellter Cyanin-Farbstoff ist:

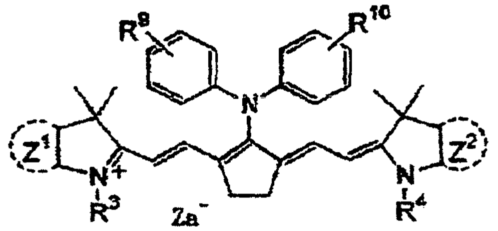

(3)

wobei in der Formel (3) $Z^1$ und $Z^2$ jeweils unabhängig einen aromatischen Ring, der einen Substituenten haben kann, oder einen heteroaromatischen Ring, der einen Substituenten haben kann, darstellen, $R^3$ und $R^4$ jeweils unabhängig eine Kohlenwasserstoffgruppe mit 20 oder weniger Kohlenstoffatomen, die einen Substituenten haben kann, darstellen, $R^9$ und $R^{10}$ jeweils unabhängig ein Wasserstoffatom oder eine Alkoxygruppe, die einen Substituenten haben kann, darstellen und $Za^-$ ein Gegenion darstellt, das vorhanden ist, wenn die Neutralisation der Ladung erforderlich ist.

9. Vorläufer für eine lithografische Druckplatte wie in jedem der Ansprüche 1 bis 8 beansprucht, der ein Vorläufer für eine lithografische Druckplatte eines Typs ist, der auf der Druckplatte entwickelbar ist, wobei ein nicht-belichteter Bereich der Bildaufzeichnungsschicht entweder durch Befeuchtungswasser oder Druckfarbe entfernt werden kann.

10. Verfahren zur Herstellung einer Platte, umfassend:

bildweises Belichten des Vorläufers für eine lithografische Druckplatte wie in Anspruch 9 beansprucht;
Anbringen des belichteten Vorläufers für eine lithografische Druckplatte auf einem Zylinder einer Druckmaschine; und
Entfernen des nicht-belichteten Bereichs der Bildaufzeichnungsschicht entweder durch Befeuchtungswasser oder Druckfarbe.

**Revendications**

1. Précurseur de plaque d'impression lithographique comprenant un support hydrophile et une couche d'enregistrement d'image contenant (A) une particule fine de polymère, (B) un composé polymérisable par radicaux et (C) une teinture absorbant de l'infrarouge, dans lequel la particule fine de polymère est une particule fine de polymère obtenue par une réaction entre un composé d'isocyanate polyvalent qui est un produit d'addition d'un composé de phénol polyhydrique ayant deux groupes hydroxyle ou plus dans une molécule de celui-ci et de diisocyanate d'isophorone et d'un composé ayant un atome d'hydrogène actif.

2. Précurseur de plaque d'impression lithographique selon la revendication 1, dans lequel le composé de phénol polyhydrique est un composé de phénol polyhydrique ayant trois groupes hydroxyle ou plus dans une molécule de celui-ci.

3. Précurseur de plaque d'impression lithographique selon la revendication 1 ou 2, dans lequel le composé de phénol polyhydrique est un composé de phénol polyhydrique ayant trois groupes hydroxyle ou plus dans une molécule de celui-ci représenté par la formule suivante (1) ou (2) :

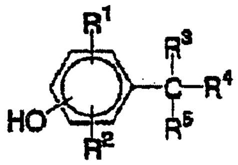

(1)

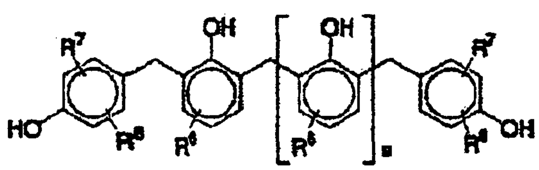

(2)

dans lesquelles,
dans la formule (1), $R^1$ et $R^2$ représentent chacun indépendamment un atome d'hydrogène, un groupe méthyle ou

un groupe cyclohexyle, $R^3$ représente un atome d'hydrogène, un groupe méthyle ou un groupe représenté par la formule suivante (a),
dans la formule (a), $R^1$ et $R^2$ représentent chacun indépendamment un atome d'hydrogène, un groupe méthyle ou un groupe cyclohexyle, n représente un entier de 0 à 2, et $R^9$ représente un atome d'hydrogène, un groupe méthyle ou un groupe cyclohexyle ;

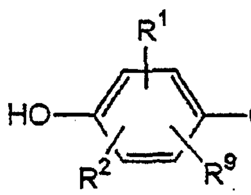

(a)

dans la formule (1), $R^4$ représente un groupe méthyle ou un groupe représenté par la formule (a), $R^5$ représente un atome d'hydrogène ou un groupe sélectionné à partir du Groupe A suivant, dans les formules du Groupe A, $R^1$ et $R^2$ représentent chacun indépendamment un atome d'hydrogène, un groupe méthyle ou un groupe cyclohexyle :

Groupe A

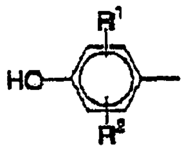

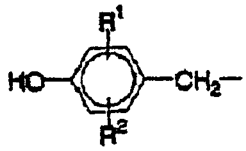

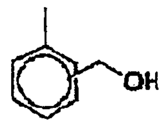

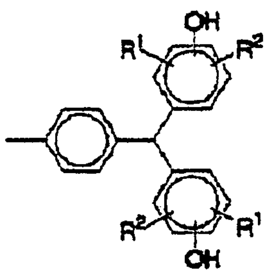

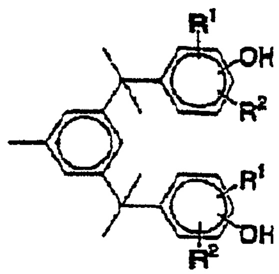

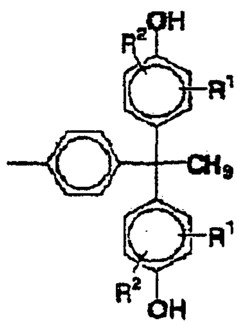

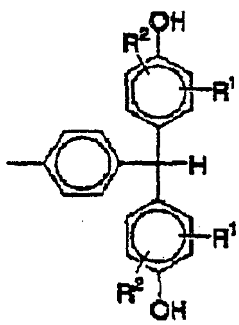

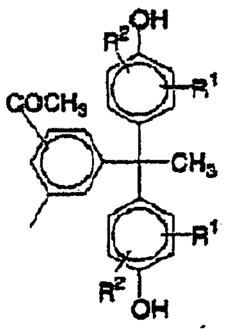

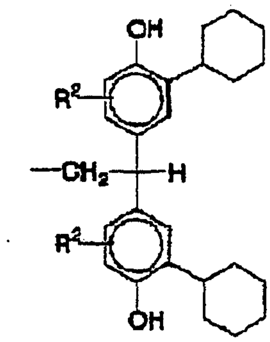

dans la formule (2), $R^6$ représente un atome d'hydrogène, un groupe méthyle, un groupe phényle ou un groupe cyclohexyle, $R^7$ et $R^8$ représentent chacun indépendamment un atome d'hydrogène, un groupe méthyle ou un groupe cyclohexyle, et m représente 0 ou 1.

**4.** Précurseur de plaque d'impression lithographique selon l'une quelconque des revendications 1 à 3, dans lequel le composé d'isocyanate polyvalent est un produit d'addition de diisocyanate d'isophorone et d'un composé représenté par la formule suivante :

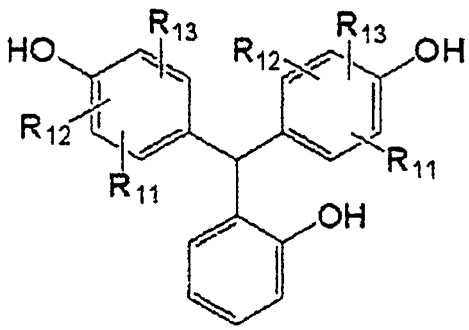

(4)

dans laquelle, dans la formule (4), $R_{11}$, $R_{12}$ et $R_{13}$ représentent chacun indépendamment un atome d'hydrogène, un groupe méthyle ou un groupe cyclohexyle.

**5.** Précurseur de plaque d'impression lithographique selon la revendication 4, dans lequel un rapport molaire du diisocyanate d'isophorone et du composé représenté par la formule (4) est de 3:1 à 6:1.

**6.** Précurseur de plaque d'impression lithographique selon l'une quelconque des revendications 1 à 5, dans lequel la particule fine de polymère a un groupe polymérisable par radicaux.

**7.** Précurseur de plaque d'impression lithographique selon l'une quelconque des revendications 1 à 6, dans lequel la particule fine de polymère a une chaîne de polyoxyalkylène dans une chaîne latérale de celle-ci.

**8.** Précurseur de plaque d'impression lithographique selon l'une quelconque des revendications 1 à 7, dans lequel la teinture absorbant de l'infrarouge est une teinture de cyanine représentée par la formule suivante (3) :

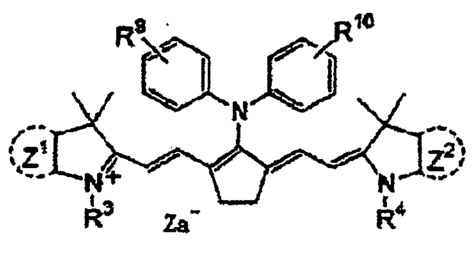

(3)

dans laquelle, dans la formule (3), $Z^1$ et $Z^2$ représentent chacun indépendamment un cycle aromatique qui peut

avoir un substituant ou un cycle hétéroaromatique qui peut avoir un substituant, $R^3$ et $R^4$ représentent chacun indépendamment un groupe hydrocarbure ayant 20 atomes de carbone ou moins qui peut avoir un substituant, $R^9$ et $R^{10}$ représentent chacun indépendamment un atome d'hydrogène ou un groupe alcoxy qui peut avoir un substituant et Zareprésente un contre-anion qui est présent quand de la neutralisation de charge est nécessaire.

**9.** Précurseur de plaque d'impression lithographique selon l'une quelconque des revendications 1 à 8, qui est un précurseur de plaque d'impression lithographique de type à développement sur presse, dans lequel une surface non exposée de la couche d'enregistrement d'image est susceptible d'être enlevée avec au moins une d'une eau de mouillage et d'une encre d'impression.

**10.** Procédé de fabrication de plaque comprenant les étapes consistant à :

exposer image par image le précurseur de plaque d'impression lithographique selon la revendication 9 ;
monter le précurseur de plaque d'impression lithographique exposé sur un cylindre d'une machine d'impression ; et
enlever une surface non exposée de la couche d'enregistrement d'image avec au moins une d'une eau de mouillage et d'une encre d'impression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004212558 A
- JP 2938397 B
- JP 2000211262 A
- JP 2001277740 A
- JP 2002029162 A
- JP 2002046361 A
- JP 2002137562 A
- JP 2002326470 A
- US 20040106060 A
- JP 5297856 A
- JP 2006508380 T
- JP 2002287344 A
- JP 2008256850 A
- JP 2001342222 A
- JP 9179296 A
- JP 9179297 A
- JP 9179298 A
- JP 2004294935 A
- JP 2006243493 A
- JP 2002275129 A
- JP 2003064130 A
- JP 2003280187 A
- JP 10333321 A
- JP 48417108 B
- JP 51037193 A
- JP 2032293 B
- JP 2016765 B
- JP 2003344997 A
- JP 2006065210 A
- JP 58049860 B
- JP 56017654 B
- JP 62039417 B
- JP 62039418 B
- JP 2000250211 A
- JP 2007094138 A
- US 7153632 B
- JP 8505958 T
- JP 2007293221 A
- JP 2007293223 A
- JP 2001133969 A
- JP 2002023360 A
- JP 2002040638 A
- JP 2002278057 A
- JP 2008195018 A
- JP 2007090850 A
- JP 5005005 A
- JP 2001222101 A
- JP 2007276454 A
- JP 2009154525 A
- JP 2006297907 A
- JP 2007050660 A
- JP 2008284858 A
- JP 2009090645 A
- JP 2009208458 A
- JP 2008284817 A
- JP 2006091479 A
- US 20080311520 A
- JP 10282679 A
- JP 2304441 A
- JP 2005238816 A
- JP 2005125749 A
- JP 2006239867 A
- JP 2006215263 A
- JP 2006188038 A
- JP 2001253181 A
- JP 2001322365 A
- US 2714066 A
- US 3181461 A
- US 3280734 A
- US 3902734 A
- US 3276868 A
- US 4153461 A
- US 4689272 A
- JP 5045885 A
- JP 6035174 A
- US 3458311 A
- JP 55049729 B
- JP 2005250216 A
- JP 2006259137 A
- JP 2005119273 A
- JP 54012215 B
- JP 1303578 A
- US 34583111 B


### Non-patent literature cited in the description


- **YOSHIO KODA.** Yuuki Gainenzu-Kiso to Oyo. Sankyo Publishing Co., Ltd, 1984
- **ASASHI KONDO.** Microcapsule. The Nikkan Kogyo Shimbun, Ltd, 1970

- **TAMOTSU KONDO et al.** Microcapsule. Sankyo Publishing Co., Ltd, 1977
- Polyurethane Jushi Handbook Polyurethane Resin Handbook. The Nikkan Kogyo Shimbun, Ltd, 1987
- **ICHIRO NISHI et al.** Kaimen Kasseizai Binran. Sangyotosho Co., Ltd, 1980
- Senryo Binran. The Society of Synthetic Organic Chemistry, 1970